(19) Europäisches Patentamt
European Patent Office
Office européen des brevets

(11) EP 4 428 996 A2

(12) EUROPEAN PATENT APPLICATION

(43) Date of publication:
**11.09.2024 Bulletin 2024/37**

(21) Application number: **24190388.9**

(22) Date of filing: **20.04.2018**

(51) International Patent Classification (IPC):
***H01M 50/124*** *(2021.01)*

(52) Cooperative Patent Classification (CPC):
**B32B 37/144; B32B 7/12; B32B 15/085; B32B 15/088; B32B 15/09; B32B 15/18; B32B 15/20; B32B 27/32; B32B 27/34; B32B 27/36; H01M 50/119; H01M 50/121; H01M 50/122; H01M 50/124; H01M 50/126;**

(Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.04.2017 JP 2017084026**
**20.04.2017 JP 2017084027**
**20.04.2017 JP 2017084028**

(62) Document number(s) of the earlier application(s) in accordance with Art. 76 EPC:
**18787250.2 / 3 614 449**

(71) Applicant: **Dai Nippon Printing Co., Ltd.**
**Tokyo 162-8001 (JP)**

(72) Inventors:
- **YASUDA, Daisuke**
  **Shinjuku-ku, Tokyo, 162-8001 (JP)**
- **HAYAKAWA, Yosuke**
  **Shinjuku-ku, Tokyo, 162-8001 (JP)**
- **TSUMORI, Kaoru**
  **Shinjuku-ku, Tokyo, 162-8001 (JP)**
- **YAMASHITA, Takanori**
  **Shinjuku-ku, Tokyo, 162-8001 (JP)**
- **YAMASHITA, Rikiya**
  **Shinjuku-ku, Tokyo, 162-8001 (JP)**

(74) Representative: **Müller-Boré & Partner Patentanwälte PartG mbB**
**Friedenheimer Brücke 21**
**80639 München (DE)**

Remarks:
This application was filed on 23.07.2024 as a divisional application to the application mentioned under INID code 62.

# (54) BATTERY PACKAGING MATERIAL, METHOD FOR MANUFACTURING THE SAME, AND BATTERY

(57) The present invention provides a battery packaging material comprising a laminate comprising at least a base material layer, a barrier layer, an adhesive layer, and a heat-sealable resin layer in this order, in which crushing of the adhesive layer is effectively prevented when the heat-sealable resin layer is heat-sealed with itself, and a high sealing strength is achieved in a high-temperature environment. The battery packaging material according to the present invention comprises a laminate comprising at least a base material layer, a barrier layer, an adhesive layer, and a heat-sealable resin layer in this order, wherein the adhesive layer has a logarithmic decrement $\Delta E$ of 2.0 or less at 120°C according to rigid-body pendulum measurement.

EP 4 428 996 A2

(52) Cooperative Patent Classification (CPC): (Cont.)
**H01M 50/131; H01M 50/133; H01M 50/186; H01M 50/193;** B32B 2255/06; B32B 2255/20; B32B 2307/31; B32B 2307/538; B32B 2307/54; B32B 2307/714; B32B 2307/7242; B32B 2307/732; B32B 2457/10; B32B 2553/00; Y02E 60/10

## Description

### Technical Field

The present invention relates to a battery packaging material, a method for producing the battery packaging material, and a battery.

### Background Art

Various types of batteries have been heretofore developed, and in every battery, a packaging material is an essential member for sealing battery elements such as an electrode and an electrolyte. Metallic packaging materials have been heretofore widely used for battery packaging.

In recent years, along with improvements in the performance of electric cars, hybrid electric cars, personal computers, cameras, mobile phones, and the like, batteries have been required to be diversified in shape, and to be thinner and lighter weight. However, the widely used metallic battery packaging materials are disadvantageous in that they have difficulty in keeping up with the diversification of shapes, and are limited in weight reduction.

Thus, a film-shaped laminate in which a base material layer/a barrier layer/a heat-sealable resin layer are laminated in this order has been proposed as a battery packaging material that can be readily processed into various shapes, and can achieve a thickness reduction and a weight reduction (see, for example, Patent Literature 1).

In such a battery packaging material, typically, a concave portion is formed by cold forming, battery elements such as an electrode and an electrolytic solution are disposed in the space formed by the concave portion, and the heat-sealable resin layer is heat-sealed with itself. As a result, a battery whose battery elements are housed inside the battery packaging material is obtained.

### Citation List

#### Patent Literature

Patent Literature 1: JP 2008-287971 A

### Summary of Invention

#### Technical Problem

In the above-described film-shaped laminate, the barrier layer is generally composed of an inorganic material having low moisture permeability. However, because the inorganic material and the heat-sealable resin layer are different types of materials, there is a problem in that the adhesive strength between the barrier layer and the heat-sealable resin layer tends to decrease. For this reason, an adhesive layer is sometimes provided between these layers to improve the adhesive strength.

On the other hand, at the time of sealing the battery elements, the heat-sealable resin layer is heat-sealed with itself by applying a high temperature and a high pressure to the battery packaging material, using metal plates or the like. However, as a result of research by the present inventors, they have found that when a high temperature and a high pressure are applied to the battery packaging material, the adhesive layer is crushed, and the sealing strength of the battery packaging material is reduced.

In particular, as a result of research by the present inventors, they have found that when the battery packaging material after heat sealing is exposed to a high-temperature environment, the sealing strength of the battery packaging material is reduced. It is assumed that when the battery packaging material after heat sealing is exposed to a high-temperature environment, the heat-sealable resin layer becomes soft, which reduces the durability against an external force, and consequently, the sealing strength is reduced. Batteries for vehicles, batteries for mobile equipment, and the like are sometimes used in a high-temperature environment, and therefore, particularly in packaging materials used for these batteries, high hermeticity is required for the battery elements in a high-temperature environment.

Under such circumstances, a main object of a first embodiment of the present invention is to provide a battery packaging material comprising a laminate comprising at least a base material layer, a barrier layer, an adhesive layer, and a heat-sealable resin layer in this order, in which crushing of the adhesive layer is effectively prevented when the heat-sealable resin layer is heat-sealed with itself, and a high sealing strength is achieved in a high-temperature environment.

Moreover, at the time of housing the battery elements using the above-described film-shaped battery packaging material, the steps as shown in the schematic diagram of Fig. 10, for example, are performed. Initially, a rectangular

battery packaging material 10 is molded to form a package having a housing space (A) for housing the battery elements such as an electrolytic solution. Subsequently, the package is folded over in half, and with terminals 15 protruding from one side of the package, two edges (10a) that include the edges having the terminals 15 are heat-sealed. Subsequently, the battery elements such as an electrolytic solution are inserted into the housing space (A) through an opening (10b) on the outer peripheral side of a blank region 10d. Subsequently, the opening (10b) is heat-sealed. In this state, the package is subjected to an aging step in a high-temperature environment. Subsequently, the heat-sealable resin layer on the inner peripheral side of the blank region 10d is heat-sealed with itself (10c), and then the blank region 10d is cut off, whereby the battery elements are hermetically sealed, and a battery is produced.

In particular, batteries for vehicles, batteries for mobile equipment, and the like are sometimes used in a high-temperature environment, and therefore, in these batteries, an electrolytic solution having high heat resistance is used, and the aging step after housing the electrolytic solution and the like is also performed in a high-temperature environment.

As a result of research by the present inventors, however, they have found that the sealing strength of the battery packaging material is reduced when the electrolytic solution and the like are sealed and exposed to a high-temperature environment, and then the heat-sealable resin layer is heat-sealed, with the electrolytic solution being attached to the heat-sealable resin layer.

Under such circumstances, a main object of a second embodiment of the present invention is to provide a battery packaging material comprising a laminate comprising at least a base material layer, a barrier layer, and a heat-sealable resin layer in this order, in which a high sealing strength is achieved by means of heat sealing, even when an electrolytic solution is contacted with the heat-sealable resin layer in a high-temperature environment, and the heat-sealable resin layer is heat-sealed with itself, with the electrolytic solution being attached to the heat-sealable resin layer.

Moreover, as described above, in the battery packaging material composed of the film-shaped laminate, a concave portion is formed by cold forming, and the battery elements and the like are housed in the concave portion. This film-shaped battery packaging material, however, is very thin, and thus, is likely to develop pinholes or cracks due to molding. For this reason, a lubricant is sometimes used for the purpose of improving the moldability of the battery packaging material.

For example, to improve the moldability of the battery packaging material, a technique is known in which a lubricant is added to the heat-sealable resin layer positioned as an innermost layer. However, in the case where a lubricant is added to the heat-sealable resin layer, there is a problem in that when, for example, a mold made of stainless steel having high surface smoothness (for example, having a surface Rz (maximum height of roughness profile) of 0.8 μm or less, as specified in Table 2 of JIS B 0659-1: 2002 Appendix 1 (Referential) Surface Roughness Standard Specimens for Comparison) is used as the mold for molding the battery packaging material, the area of contact between the mold and the heat-sealable resin layer is large, and thus, the surface of the heat-sealable resin layer is likely to be abraded, which causes the lubricant positioned on the surface portion of the heat-sealable resin layer to be attached to the mold during molding of the battery packaging material, and consequently, the mold may be contaminated. If molding is repeated with the mold contaminated with the lubricant, the lubricant hardened on the mold surface may be transferred to the heat-sealable resin layer of the battery packaging material. If the heat-sealable resin layer is subjected to heat sealing, with masses of the lubricant being attached to the heat-sealable resin layer, the regions to which the lubricant is attached melt unevenly, which causes a decrease in sealing strength and the like. To prevent this, it is necessary to increase the frequency of cleaning to remove the lubricant attached to the mold, which causes a decrease in continuous productivity of batteries.

In particular, for large batteries such as batteries for vehicles or stationary batteries, the mold size is also large (that is, the area of contact between the mold and the battery packaging material is large), and contamination of the mold with a lubricant is likely to occur. For this reason, there is a desire for the development of a technique for effectively preventing contamination of the mold with a lubricant, while ensuring excellent moldability of the battery packaging material.

Moreover, large batteries such as batteries for vehicles or stationary batteries are used over a long period, with an electrolytic solution and the like being housed therein. Thus, a high sealing strength by means of heat sealing is also required in these batteries.

Under such circumstances, a main object of a third embodiment of the present invention is to provide a battery packaging material comprising a laminate comprising at least a base material layer, a barrier layer, and a heat-sealable resin layer in this order, in which contamination of the mold during molding is prevented, and a high sealing strength is achieved by means of heat sealing.

Solution to Problem

The present inventors conducted extensive research to solve the above-described problem concerning the first embodiment. As a result, they have found that in a battery packaging material comprising a laminate comprising at least a base material layer, a barrier layer, an adhesive layer, and a heat-sealable resin layer in this order, wherein the adhesive

layer has a logarithmic decrement ΔE of 2.0 or less at 120°C according to rigid-body pendulum measurement, crushing of the adhesive layer is effectively prevented when the heat-sealable resin layer is heat-sealed with itself, and a high sealing strength is achieved in a high-temperature environment. The first embodiment of present invention has been completed as a result of further research based on these findings.

The present inventors also conducted extensive research to solve the above-described problem concerning the second embodiment. As a result, they have found that in a battery packaging material comprising a laminate comprising at least a base material layer, a barrier layer, and a heat-sealable resin layer in this order, wherein when a temperature difference $T_1$ and a temperature difference $T_2$ are measured using the following methods, a value obtained by dividing the temperature difference $T_2$ by the temperature difference $T_1$ ($T_2/T_1$ ratio) is 0.60 or more, a high sealing strength is achieved by means of heat sealing, even when an electrolytic solution is contacted with the heat-sealable resin layer in a high-temperature environment, and the heat-sealable resin layer is heat-sealed with itself, with the electrolytic solution being attached to the heat-sealable resin layer.

(Measurement of Temperature Difference $T_1$)

The temperature difference $T_1$ between an extrapolated melting onset temperature and an extrapolated melting end temperature of a melting peak temperature of the heat-sealable resin layer is measured by differential scanning calorimetry.

(Measurement of Temperature Difference $T_2$)

In an environment at a temperature of 85°C, the heat-sealable resin layer is allowed to stand for 72 hours in an electrolytic solution, which is a solution having a lithium hexafluorophosphate concentration of 1 mol/l, and a volume ratio of ethylene carbonate, diethyl carbonate, and dimethyl carbonate of 1:1:1, and then dried, and the temperature difference $T_2$ between an extrapolated melting onset temperature and an extrapolated melting end temperature of a melting peak temperature of the heat-sealable resin layer after drying is measured by differential scanning calorimetry. As used herein, the solution having a volume ratio of ethylene carbonate, diethyl carbonate, and dimethyl carbonate of 1:1:1 refers to a solution obtained by mixing ethylene carbonate, diethyl carbonate, and dimethyl carbonate at a volume ratio of 1:1:1.

Here, Fig. 11 schematically shows the temperature difference $T_1$ and the temperature difference $T_2$ measured by differential scanning calorimetry. In Fig. 11, Ts represents the onset point (extrapolated melting onset temperature), and Te represents the end point (extrapolated melting end temperature). In Fig. 11, the temperature difference $T_2$ is smaller than the temperature difference $T_1$.

The second embodiment of present invention has been completed as a result of further research based on these findings.

The present inventors also conducted extensive research to solve the above-described problem concerning the third embodiment. As a result, they have found that in a battery packaging material comprising a laminate comprising at least a base material layer, a barrier layer, and a heat-sealable resin layer in this order, wherein the heat-sealable resin layer contains a lubricant, and the heat-sealable resin layer has a tensile elastic modulus in a range of 500 MPa or more and 1000 MPa or less, as measured in accordance with JIS K 7161: 2014, contamination of the mold during molding is prevented, and a high sealing strength is achieved by means of heat sealing.

The third embodiment of present invention has been completed as a result of further research based on these findings.

In summary, the present invention provides the following embodiments of the invention:

Item 1. A battery packaging material comprising:

a laminate comprising at least a base material layer, a barrier layer, an adhesive layer, and a heat-sealable resin layer in this order, wherein
the adhesive layer has a logarithmic decrement ΔE of 2.0 or less at 120°C according to rigid-body pendulum measurement.

Item 2. The battery packaging material according to item 1, wherein the adhesive layer has a thickness remaining ratio of 40% or more, after the heat-sealable resin layer of the laminate is opposed to itself, and heated and pressed in a laminated direction at a temperature of 190°C and a surface pressure of 2.0 MPa for a time of 3 seconds.

Item 3. The battery packaging material according to item 1 or 2, wherein a resin constituting the adhesive layer includes an acid-modified polyolefin.

Item 4. The battery packaging material according to any one of items 1 to 3, wherein the adhesive layer has a

thickness of 50 μm or less.

Item 5. A battery packaging material comprising:

a laminate comprising at least a base material layer, a barrier layer, and a heat-sealable resin layer in this order, wherein

when a temperature difference $T_1$ and a temperature difference $T_2$ are measured using the following methods, a value obtained by dividing the temperature difference $T_2$ by the temperature difference $T_1$ is 0.60 or more:

(measurement of the temperature difference $T_1$)

the temperature difference $T_1$ between an extrapolated melting onset temperature and an extrapolated melting end temperature of a melting peak temperature of the heat-sealable resin layer is measured by differential scanning calorimetry;

(measurement of the temperature difference $T_2$)

in an environment at a temperature of 85°C, the heat-sealable resin layer is allowed to stand for 72 hours in an electrolytic solution, which is a solution having a lithium hexafluorophosphate concentration of 1 mol/l, and a volume ratio of ethylene carbonate, diethyl carbonate, and dimethyl carbonate of 1:1:1, and then dried, and the temperature difference $T_2$ between an extrapolated melting onset temperature and an extrapolated melting end temperature of a melting peak temperature of the heat-sealable resin layer after drying is measured by differential scanning calorimetry.

Item 6. The battery packaging material according to item 5, wherein an absolute value of a difference between the temperature difference $T_2$ and the temperature difference $T_1$ is 10°C or less.

Item 7. The battery packaging material according to item 5 or 6, wherein when, in an environment at 85°C, the battery packaging material is contacted for 72 hours with an electrolytic solution, which is a solution having a lithium hexafluorophosphate concentration of 1 mol/l, and a volume ratio of ethylene carbonate, diethyl carbonate, and dimethyl carbonate of 1:1:1, and thereafter, with the electrolytic solution being attached to a surface of the heat-sealable resin layer, the heat-sealable resin layer is heat-sealed with itself at a temperature of 190°C and a surface pressure of 2.0 MPa for a time of 3 seconds, and then the heat-sealed interface is peeled, a sealing strength measured at the time is 85% or more of a sealing strength when the battery packaging material is not contacted with the electrolytic solution.

Item 8. The battery packaging material according to any one of items 5 to 7, wherein the heat-sealable resin layer has a thickness of 10 μm or more.

Item 9. A battery packaging material comprising:

a laminate comprising at least a base material layer, a barrier layer, and a heat-sealable resin layer in this order, wherein

the heat-sealable resin layer contains a lubricant, and

the heat-sealable resin layer has a tensile elastic modulus in a range of 500 MPa or more and 1000 MPa or less, as measured in accordance with JIS K 7161: 2014.

Item 10. The battery packaging material according to item 9, wherein when, with the heat-sealable resin layer of the battery packaging material being opposed to itself, the heat-sealable resin layer is heat-sealed with itself at a temperature of 190°C and a surface pressure of 0.5 MPa for a time of 1 second, and subsequently, using a tensile testing machine, a tensile strength is measured by peeling the heat-sealed interface at a tensile rate of 300 mm/minute, a peel angle of 180°, and a distance between chucks of 50 mm, in an environment at a temperature of 25°C and a relative humidity of 50%, the tensile strength is kept at 100 N/15 mm or more for a time of 1.5 seconds from 1 second after the start of measuring the tensile strength.

Item 11. The battery packaging material according to item 9 or 10, wherein a dynamic friction coefficient between the heat-sealable resin layer and a stainless steel plate having an Rz (maximum height of roughness profile) of 0.8 μm, as specified in Table 2 of JIS B 0659-1: 2002 Appendix 1 (Referential) Surface Roughness Standard Specimens for Comparison, is 0.2 or less.

Item 12. The battery packaging material according to any one of items 9 to 11, wherein the heat-sealable resin layer has a thickness of 30 μm or more.

Item 13. The battery packaging material according to any one of items 1 to 12, wherein the base material layer contains at least one of a polyester resin and a polyamide resin.

Item 14. The battery packaging material according to any one of items 1 to 13, wherein a resin constituting the heat-sealable resin layer includes a polyolefin.

Item 15. The battery packaging material according to any one of items 1 to 14, wherein the barrier layer is composed of an aluminum alloy foil or a stainless steel foil.

Item 16. A method for producing a battery packaging material comprising the step of:

obtaining a laminate by laminating at least a base material layer, a barrier layer, an adhesive layer, and a heat-sealable resin layer in this order, wherein
the adhesive layer has a logarithmic decrement ΔE of 2.0 or less at 120°C according to rigid-body pendulum measurement.

Item 17. A method for producing a battery packaging material comprising the step of:

obtaining a laminate by laminating at least a base material layer, a barrier layer, and a heat-sealable resin layer in this order, wherein
in the heat-sealable resin layer, when a temperature difference $T_1$ and a temperature difference $T_2$ are measured using the following methods, a value obtained by dividing the temperature difference $T_2$ by the temperature difference $T_1$ is 0.60 or more:
(measurement of the temperature difference $T_1$)
the temperature difference $T_1$ between an extrapolated melting onset temperature and an extrapolated melting end temperature of a melting peak temperature of the heat-sealable resin layer is measured by differential scanning calorimetry;
(measurement of the temperature difference $T_2$)
in an environment at a temperature of 85°C, the heat-sealable resin layer is allowed to stand for 72 hours in an electrolytic solution, which is a solution having a lithium hexafluorophosphate concentration of 1 mol/l, and a volume ratio of ethylene carbonate, diethyl carbonate, and dimethyl carbonate of 1:1:1, and then dried, and the temperature difference $T_2$ between an extrapolated melting onset temperature and an extrapolated melting end temperature of a melting peak temperature of the heat-sealable resin layer after drying is measured by differential scanning calorimetry.

Item 18. A method for producing a battery packaging material comprising the step of:

obtaining a laminate by laminating at least a base material layer, a barrier layer, and a heat-sealable resin layer in this order, wherein
the heat-sealable resin layer contains a lubricant, and
the heat-sealable resin layer has a tensile elastic modulus in a range of 500 MPa or more and 1000 MPa or less, as measured in accordance with JIS K 7161: 2014.

Item 19. A battery comprising a battery element comprising at least a positive electrode, a negative electrode, and an electrolyte, the battery element being housed in a package formed of the battery packaging material according to any one of items 1 to 15.

Advantageous Effects of Invention

The first embodiment of the present invention can provide a battery packaging material comprising a laminate comprising at least a base material layer, a barrier layer, an adhesive layer, and a heat-sealable resin layer in this order, in which crushing of the adhesive layer is effectively prevented when the heat-sealable resin layer is heat-sealed with itself, and a high sealing strength is achieved in a high-temperature environment. The first embodiment of the present invention can also provide a method for producing the battery packaging material and a battery obtained using the battery packaging material.

The second embodiment of the present invention can provide a battery packaging material comprising a laminate comprising at least a base material layer, a barrier layer, and a heat-sealable resin layer in this order, in which a high sealing strength is achieved by means of heat sealing, even when an electrolytic solution is contacted with the heat-sealable resin layer in a high-temperature environment, and the heat-sealable resin layer is heat-sealed with itself, with the electrolytic solution being attached to the heat-sealable resin layer. The second embodiment of the present invention can also provide a method for producing the battery packaging material and a battery obtained using the battery packaging material.

The third embodiment of the present invention can provide a battery packaging material comprising a laminate comprising at least a base material layer, a barrier layer, and a heat-sealable resin layer in this order, in which contamination of the mold during molding is prevented, and a high sealing strength is achieved by means of heat sealing. The third embodiment of the present invention can also provide a method for producing the battery packaging material and a battery obtained using the battery packaging material.

Brief Description of Drawings

Fig. 1 is a diagram showing one example of a cross-sectional structure of a battery packaging material according to (the first to third embodiments of) the present invention.
Fig. 2 is a diagram showing one example of a cross-sectional structure of a battery packaging material according to (the first to third embodiments of) the present invention.
Fig. 3 is a diagram showing one example of a cross-sectional structure of a battery packaging material according to (the first to third embodiments of) the present invention.
Fig. 4 is a schematic diagram for explaining the method for measuring the sealing strength.
Fig. 5 is a schematic diagram for explaining the method for measuring the sealing strength.
Fig. 6 is a schematic diagram for explaining the method for measuring the sealing strength.
Fig. 7 is a schematic diagram for explaining the method for measuring the logarithmic decrement ΔE by rigid-body pendulum measurement.
Fig. 8 is a diagram showing one example of a cross-sectional structure of a battery packaging material according to the second and third embodiments of the present invention.
Fig. 9 is a schematic diagram for explaining the method for measuring the sealing strength.
Fig. 10 is a schematic diagram that explains one example of the steps of housing battery elements using a film-shaped battery packaging material.
Fig. 11 is a diagram that schematically shows the temperature difference $T_1$ and the temperature difference $T_2$ measured by differential scanning calorimetry.
Fig. 12 is a schematic diagram for explaining the method for measuring the dynamic friction coefficient.
Fig. 13 is a schematic diagram in which, in a graph showing the relationship between time and tensile strength, obtained by measuring the tensile strength, the tensile strength is kept at 100 N/15 mm or more for a time of 1.5 seconds from 1 second after the start of measuring the tensile strength.

Description of Embodiments

A battery packaging material according to a first embodiment of the present invention comprises a laminate comprising at least a base material layer, a barrier layer, an adhesive layer, and a heat-sealable resin layer in this order, wherein the adhesive layer has a logarithmic decrement ΔE of 2.0 or less at 120°C according to rigid-body pendulum measurement. In the battery packaging material of the present invention, because of these features, crushing of the adhesive layer is effectively prevented when the heat-sealable resin layer is heat-sealed with itself, and a high sealing strength is achieved in a high-temperature environment. A separator inside a battery is typically heat-resistant up to around 120 to 140°C. Thus, great significance lies in that in the battery packaging material according to the first embodiment of the present invention, the logarithmic decrement ΔE is 2.0 or less at 120°C according to rigid-body pendulum measurement, so that a high sealing strength is achieved in a high-temperature environment at 120°C.

A battery packaging material according to a second embodiment of the present invention comprises a laminate comprising at least a base material layer, a barrier layer, and a heat-sealable resin layer in this order, wherein when a temperature difference $T_1$ and a temperature difference $T_2$ are measured using the following methods, a value obtained by dividing the temperature difference $T_2$ by the temperature difference $T_1$ ($T_2/T_1$ ratio) is 0.60 or more. In the battery packaging material according to the second embodiment of the present invention, because of these features, a high sealing strength is achieved by means of heat sealing, even when an electrolytic solution is contacted with the heat-sealable resin layer in a high-temperature environment, and the heat-sealable resin layer is heat-sealed with itself, with the electrolytic solution being attached to the heat-sealable resin layer.

(Measurement of Temperature Difference $T_1$)

The temperature difference $T_1$ between an extrapolated melting onset temperature and an extrapolated melting end temperature of a melting peak temperature of the heat-sealable resin layer is measured by differential scanning calorimetry. In the measurement of the temperature difference $T_1$, unlike in the measurement of the temperature difference $T_2$ described below, the heat-sealable resin layer to be measured is the heat-sealable resin layer that has not been subj ected to a treatment such as immersion in an electrolytic solution.

(Measurement of Temperature Difference $T_2$)

In an environment at a temperature of 85°C, the heat-sealable resin layer is allowed to stand for 72 hours in

an electrolytic solution, which is a solution having a lithium hexafluorophosphate concentration of 1 mol/l, and a volume ratio of ethylene carbonate, diethyl carbonate, and dimethyl carbonate of 1:1:1, and then dried, and the temperature difference $T_2$ between an extrapolated melting onset temperature and an extrapolated melting end temperature of a melting peak temperature of the heat-sealable resin layer after drying is measured by differential scanning calorimetry.

A battery packaging material according to a third embodiment of the present invention comprises a laminate comprising at least a base material layer, a barrier layer, and a heat-sealable resin layer in this order, wherein the heat-sealable resin layer contains a lubricant, and the heat-sealable resin layer has a tensile elastic modulus in a range of 500 MPa or more and 1000 MPa or less, as measured in accordance with JIS K 7161: 2014. In the battery packaging material of the present invention, because of these features, contamination of the mold during molding is prevented, and a high sealing strength is achieved by means of heat sealing.

The first to third embodiments of the present invention will be hereinafter described in detail. In the following description, matters common among the first to third embodiments are described, unless it is expressly stated that any of these embodiments is described.

In the present specification, any numerical range indicated by "... to ..." is intended to mean "... or more" and "... or less". For example, the recitation "2 to 15 mm" is intended to mean 2 mm or more and 15 mm or less.

## 1. Laminated Structure and Physical Properties of Battery Packaging Material

As shown in Fig. 1, for example, a battery packaging material 10 according to the first embodiment of the present invention comprises a laminate comprising a base material layer 1, a barrier layer 3, an adhesive layer 5, and a heat-sealable resin layer 4 in this order. Moreover, as shown in Fig. 8, for example, the battery packaging material 10 according to second and third embodiments of the present invention comprises a laminate comprising at least the base material layer 1, the barrier layer 3, and the heat-sealable resin layer 4 in this order. In the battery packaging material 10 according to the second and third embodiments of the present invention as well, the adhesive layer 5 may be provided between the barrier layer 3 and the heat-sealable resin layer 4. In the battery packaging material of the present invention, the base material layer 1 is an outermost layer, and the heat-sealable resin layer 4 is an innermost layer. That is, during the assembly of a battery, the heat-sealable resin layer 4 that is positioned on the periphery of battery elements is heat-sealed with itself to hermetically seal the battery elements, so that the battery elements are sealed.

As shown in Fig. 2, for example, the battery packaging material 10 of the present invention may comprise an adhesive agent layer 2 between the base material layer 1 and the barrier layer 3. Furthermore, as shown in Fig. 3, a surface coating layer 6 may be optionally provided on the outer side (opposite to the heat-sealable resin layer 4) of the base material layer 1.

While the thickness of the laminate constituting the battery packaging material 10 of the present invention is not particularly limited, it is, for example, 180 μm or less, preferably 160 μm or less, more preferably 150 μm or less, still more preferably about 60 to 180 μm, even more preferably about 60 to 160 μm, and still more preferably about 60 to 150 μm. In the first embodiment, by setting the thickness as described above, it is possible to obtain a battery packaging material in which a high sealing strength is achieved in a high-temperature environment, while reducing the thickness of the battery packaging material and increasing the energy density of the battery. Moreover, in the second embodiment, it is possible to obtain a battery packaging material in which a high sealing strength is achieved by means of heat sealing, even when an electrolytic solution is contacted with the heat-sealable resin layer in a high-temperature environment, and the heat-sealable resin layer is heat-sealed with itself, with the electrolytic solution being attached to the heat-sealable resin layer. Furthermore, in the third embodiment, it is possible to obtain a battery packaging material in which contamination of the mold during molding is prevented, and a high sealing strength is achieved by means of heat sealing, while reducing the thickness of the battery packaging material and increasing the energy density of the battery.

In the battery packaging material according to the first embodiment of the present invention, when, with the heat-sealable resin layer 4 being opposed to itself, using metal plates having a width of 7 mm, the heat-sealable resin layer 4 is heated and pressed in a laminated direction from both sides of the test sample, at a temperature of 190°C and a surface pressure of 2.0 MPa for a time of 3 seconds, so that the heat-sealable resin layer 4 is heat-sealed with itself (see Figs. 4 and 5), and subsequently, as shown in Fig. 6, in the form of T-peel, using a tensile testing machine, the tensile strength (sealing strength) is measured by peeling the heat-sealed interface at a tensile rate of 300 mm/minute, a peel angle of 180°, and a distance between chucks of 50 mm, in an environment at a temperature of 25°C, for a time of 1.5 seconds from the start of measuring the tensile strength, the maximum value of the measured tensile strength (sealing strength) is preferably 125 N/15 mm or more, and more preferably 130 N/15 mm or more. The upper limit of the tensile strength is, for example, about 200 N/15 mm or less, and preferred ranges of the tensile strength include from 125 to 200 N/15 mm and from 130 to 200 N/15 mm. In order to set the tensile strength as described above, for example, the type, the composition, the molecular weight, and the like of the resin constituting the heat-sealable resin layer are adjusted.

Furthermore, in the battery packaging material according to the first embodiment of the present invention, when,

with the heat-sealable resin layer 4 being opposed to itself, using metal plates having a width of 7 mm, the heat-sealable resin layer 4 is heated and pressed in a laminated direction from both sides of the test sample, at a temperature of 190°C and a surface pressure of 2.0 MPa for a time of 3 seconds, so that the heat-sealable resin layer 4 is heat-sealed with itself (see Figs. 4 and 5), and subsequently, as shown in Fig. 6, in the form of T-peel, using a tensile testing machine, the tensile strength (sealing strength) is measured by peeling the heat-sealed interface at a tensile rate of 300 mm/minute, a peel angle of 180°, and a distance between chucks of 50 mm, in an environment at a temperature of 140°C, for a time of 1.5 seconds from the start of measuring the tensile strength, the maximum value of the measured tensile strength (sealing strength) is preferably 4.0 N/15 mm or more, and more preferably 4.5 N/15 mm or more. The upper limit of the tensile strength is, for example, about 5.0 N/15 mm or less, and preferred ranges of the tensile strength include from 4.0 to 5.0 N/15 mm and from 4.5 to 5.0 N/15 mm. As described above, a separator inside a battery is typically heat-resistant up to around 120 to 140°C. Thus, in the battery packaging material according to the first embodiment of the present invention, it is preferred that the above-described maximum value of the tensile strength (sealing strength) in a high-temperature environment at 140°C be in the above-described range of values. In order to set the tensile strength as described above, for example, the type, the composition, the molecular weight, and the like of the resin constituting the heat-sealable resin layer are adjusted.

As shown in the Examples below, the above-described tensile test at each temperature is performed in a thermostat. In the thermostat adjusted to a predetermined temperature (25 or 140°C), the test sample is mounted on the chucks and held for 2 minutes, and then the measurement is started.

Moreover, in the battery packaging material according to the second embodiment of the present invention, when, in an environment at 85°C, the battery packaging material is contacted for 72 hours with an electrolytic solution (a solution having a lithium hexafluorophosphate concentration of 1 mol/l, and a volume ratio of ethylene carbonate, diethyl carbonate, and dimethyl carbonate of 1:1:1 (a solution obtained by mixing ethylene carbonate, diethyl carbonate, and dimethyl carbonate at a volume ratio of 1:1:1)), and thereafter, with the electrolytic solution being attached to a surface of the heat-sealable resin layer, the heat-sealable resin layer is heat-sealed with itself at a temperature of 190°C and a surface pressure of 2.0 MPa for a time of 3 seconds, and then the heat-sealed interface is peeled, a sealing strength measured at the time is preferably 85% or more of a sealing strength when the battery packaging material is not contacted with the electrolytic solution (i.e., the sealing-strength retention ratio is 85% or more), more preferably 90% or more, and still more preferably 100%. Moreover, the sealing-strength retention ratio after contact with the electrolytic solution for 120 hours is preferably 85% or more, more preferably 90% or more, and still more preferably 100%.

(Method for Measuring Sealing-Strength Retention Ratio)

The sealing-strength retention ratio (%) after contact with the electrolytic solution is calculated using, as the reference (100%), the sealing strength before contact with the electrolytic solution, which is measured by the following method:

<Measurement of Sealing Strength before Contact with Electrolytic Solution>

The tensile strength (sealing strength) is measured in the same manner as in <Measurement of Sealing Strength after Contact with Electrolytic Solution> below, except that the electrolytic solution is not injected into the test sample. The maximum tensile strength until the heat-sealed portion is completely peeled is determined as the sealing strength before contact with the electrolytic solution.

<Measurement of Sealing Strength after Contact with Electrolytic Solution>

As shown in the schematic diagram of Fig. 9, the battery packaging material is cut into a rectangle having a size of 100 mm in width (x direction) × 200 mm in length (z direction) to prepare a test sample (Fig. 9a). The test sample is folded over at the center in the z direction, so that the heat-sealable resin layer side is placed over itself (Fig. 9b). Subsequently, both ends of the folded test sample in the x direction are sealed by heat sealing (temperature: 190°C, surface pressure: 2.0 MPa, time: 3 seconds) to mold the test sample into a bag having one opening E (Fig. 9c). Subsequently, 6 g of an electrolytic solution (a solution having a lithium hexafluorophosphate concentration of 1 mol/l, and a volume ratio of ethylene carbonate, diethyl carbonate, and dimethyl carbonate of 1:1:1) is injected through the opening E in the test sample molded into the bag (Fig. 9d), and the end having the opening E is sealed by heat sealing (temperature: 190°C, surface pressure: 2.0 MPa, time: 3 seconds) (Fig. 9e). Subsequently, with its folded portion facing down, the bag-shaped test sample is allowed to stand in an environment at a temperature of 85°C for a predetermined storage time (time for contact with the electrolytic solution, which is 72 or 120 hours, for example). Subsequently, the end of the test sample is cut (Fig. 9e) to discharge all of the electrolytic solution. Subsequently, with the electrolytic solution being attached to the surface of the heat-sealable resin layer, the upper and lower surfaces of the test sample are held between

metal plates (7 mm in width), and the heat-sealable resin layer is heat-sealed with itself at a temperature of 190°C and a surface pressure of 1.0 MPa for a time of 3 seconds (Fig. 9f). Subsequently, the test sample is cut into a width of 15 mm using a two-edged sample cutter so that the sealing strength at a width (x direction) of 15 mm can be measured (Figs. 9f and 9g). Subsequently, in the form of T-peel, using a tensile testing machine, the tensile strength (sealing strength) is measured by peeling the heat-sealed interface at a tensile rate of 300 mm/minute, a peel angle of 180°, and a distance between chucks of 50 mm, in an environment at a temperature of 25°C (Fig. 6). The maximum tensile strength until the heat-sealed portion is completely peeled is determined as the sealing strength after contact with the electrolytic solution.

Moreover, in the battery packaging material according to the third embodiment of the present invention, when a tensile strength is measured using the following method, the tensile strength is preferably kept at 100 N/15 mm or more, more preferably 110 to 160 N/15 mm, and still more preferably 120 to 160 N/15 mm, for a time of 1.5 seconds from 1 second after the start of measuring the tensile strength. The time during which the tensile strength is kept at 100 N/15 mm or more from 1 second after the start of measuring the tensile strength may be at least 1.5 seconds; as the keeping time becomes longer, for example, 2, 3, or 9 seconds, the sealing strength will become higher.

Fig. 13 shows a schematic diagram in which, in a graph showing the relationship between time and tensile strength, obtained by measuring the tensile strength, the tensile strength is kept at 100 N/15 mm or more for a time of 1.5 seconds from 1 second after the start of measuring the tensile strength.

(Method for Measuring Tensile Strength (Sealing Strength))

With the heat-sealable resin layer 4 of the battery packaging material being opposed to itself, the heat-sealable resin layer is heat-sealed with itself at a temperature of 190°C and a surface pressure of 1.0 MPa for a time of 3 seconds. Subsequently, using a tensile testing machine, a tensile strength (sealing strength (N/15 mm)) is measured by peeling the heat-sealed interface at a tensile rate of 300 mm/minute, a peel angle of 180°, and a distance between chucks of 50 mm, in an environment at a temperature of 25°C and a relative humidity of 50%, for a time of 1.5 seconds or more from the start of measuring the tensile strength. The conditions described in the Examples are adopted as more specific conditions.

## 2. Layers That Form Battery Packaging Material

### [Base Material Layer 1]

The base material layer 1 is common among the first to third embodiments. In the battery packaging material of the present invention, the base material layer 1 is positioned as an outermost layer. The material that forms the base material layer 1 is not particularly limited as long as it has insulation properties. Examples of materials that form the base material layer 1 include resin films of polyester resins, polyamide resins, epoxy resins, acrylic resins, fluororesins, polyurethane resins, silicone resins, phenol resins, polycarbonates, and mixtures or copolymers thereof, for example. Among the above, for example, polyester resins and polyamide resins are preferred, and biaxially stretched polyester resins and biaxially stretched polyamide resins are more preferred. Specific examples of polyester resins include polyethylene terephthalate, polybutylene terephthalate, polyethylene naphthalate, polybutylene naphthalate, and copolyesters. Specific examples of polyamide resins include nylon 6, nylon 66, copolymers of nylon 6 and nylon 66, nylon 6,10, and polyamide MXD6 (polymethaxylylene adipamide).

While the base material layer 1 may be formed of a single layer of a resin film, it may be formed of two or more layers of resin films, in order to improve the pinhole resistance or insulation properties. Specific examples include a multilayer structure in which a polyester film and a nylon film are laminated, a multilayer structure in which a plurality of layers of nylon films are laminated, and a multilayer structure in which a plurality of layers of polyester films are laminated. When the base material layer 1 has a multilayer structure, it is preferably composed of a laminate of a biaxially stretched nylon film and a biaxially stretched polyester film, a laminate of a plurality of layers of biaxially stretched nylon films, or a laminate of a plurality of layers of biaxially stretched polyester films. For example, when the base material layer 1 is formed of two layers of resin films, it preferably has a structure in which a polyester resin and a polyester resin are laminated, a structure in which a polyamide resin and a polyamide resin are laminated, or a structure in which a polyester resin and a polyamide resin are laminated, and more preferably has a structure in which polyethylene terephthalate and polyethylene terephthalate are laminated, a structure in which nylon and nylon are laminated, or a structure in which polyethylene terephthalate and nylon are laminated. Because a polyester resin is unlikely to discolor when, for example, the electrolytic solution is attached to the surface, the laminated structure of the base material layer 1 is preferably formed such that the polyester resin is positioned as an outermost layer. When the base material layer 1 has a multilayer structure, the thickness of each of the layers is preferably about 2 to 25 μm, for example.

When the base material layer 1 is formed of multiple layers of resin films, the two or more resin films may be

laminated with an adhesive component such as an adhesive or an adhesive resin sandwiched therebetween. The type, the amount, and the like of the adhesive component to be used are the same as described below for the adhesive agent layer 2. The method for laminating the two or more layers of resin films is not particularly limited, and a known method can be adopted, such as, for example, a dry lamination method, a sandwich lamination method, or a co-extrusion lamination method, preferably the dry lamination method. When the layers are laminated using the dry lamination method, a polyurethane-based adhesive is preferably used as an adhesive layer. In this case, the thickness of the adhesive layer is about 2 to 5 μm, for example.

In the present invention, from the viewpoint of improving the moldability of the battery packaging material, a lubricant is preferably attached to the surface of the base material layer 1. While the lubricant is not particularly limited, it is preferably an amide-based lubricant, for example. Specific examples of the amide-based lubricant include the same lubricants as those mentioned below for the heat-sealable resin layer 4.

When a lubricant is present on the surface of the base material layer 1, the amount of the lubricant present is not particularly limited, but is preferably about 3 $mg/m^2$ or more, more preferably about 4 to 15 $mg/m^2$, and still more preferably about 5 to 14 $mg/m^2$.

A lubricant may be contained in the base material layer 1. The lubricant present on the surface of the base material layer 1 may be the lubricant that is contained in the resin constituting the base material layer 1 and exuded therefrom, or may be the lubricant applied to the surface of the base material layer 1.

While the entire thickness of the base material layer 1 is not particularly limited as long as the function as a base material layer is achieved, it is about 3 to 50 μm, and preferably about 10 to 35 μm, for example.

[Adhesive Agent Layer 2]

The adhesive agent layer 2 is common among the first to third embodiments. In the battery packaging material 10 of the present invention, the adhesive agent layer 2 is a layer that is optionally provided between the base material layer 1 and the barrier layer 3, in order to strongly bond these layers.

The adhesive agent layer 2 is formed of an adhesive capable of bonding the base material layer 1 and the barrier layer 3. The adhesive to be used for forming the adhesive agent layer 2 may be a two-liquid curable adhesive or a one-liquid curable adhesive. Furthermore, the adhesion mechanism of the adhesive used for forming the adhesive agent layer 2 is not particularly limited, and may be any of a chemical reaction type, a solvent volatilization type, a heat melting type, a heat pressing type, and the like.

Specific examples of adhesive components usable for forming the adhesive agent layer 2 include polyester-based resins, such as polyethylene terephthalate, polybutylene terephthalate, polyethylene naphthalate, polybutylene naphthalate, polyethylene isophthalate, and copolyesters; polyether-based adhesives; polyurethane-based adhesives; epoxy-based resins; phenol resin-based resins; polyamide-based resins, such as nylon 6, nylon 66, nylon 12, and copolyamides; polyolefin-based resins, such as polyolefins, carboxylic acid-modified polyolefins, and metal-modified polyolefins; polyvinyl acetate-based resins; cellulose-based adhesives; (meth)acrylic-based resins; polyimide-based resins; amino resins, such as urea resins and melamine resins; rubbers, such as chloroprene rubber, nitrile rubber, and styrene-butadiene rubber; and silicone-based resins. These adhesive components may be used alone or in combinations of two or more. Among these adhesive components, polyurethane-based adhesives are preferred.

While the thickness of the adhesive agent layer 2 is not particularly limited as long as the adhesive function is achieved, it is about 1 to 10 μm, and preferably about 2 to 5 μm, for example.

[Barrier Layer 3]

The barrier layer 3 is common among the first to third embodiments. In the battery packaging material, the barrier layer 3 is a layer that serves to improve the strength of the battery packaging material, as well as prevent the ingress of water vapor, oxygen, light, and the like into the battery. The barrier layer 3 is preferably a metal layer, that is, a layer formed of a metal. Specific examples of the metal constituting the barrier layer 3 include aluminum, stainless steel, and titanium, and aluminum is preferred. The barrier layer 3 can be formed of, for example, a metal foil or a vapor-deposited metal film, a vapor-deposited inorganic oxide film, a vapor-deposited carbon-containing inorganic oxide film, or a film provided with any of these vapor-deposited films. The barrier layer 3 is preferably formed of a metal foil, and more preferably formed of an aluminum alloy foil. From the viewpoint of preventing the generation of creases or pinholes in the barrier layer 3 during the production of the battery packaging material, the barrier layer is preferably formed of a soft aluminum alloy foil, for example, annealed aluminum (JIS H4160: 1994 A8021 H-O, JIS H4160: 1994 A8079 H-O, JIS H4000: 2014 A8021 P-O, and JIS H4000: 2014 A8079 P-O).

Examples of stainless steel foils include austenitic, ferritic, austenitic-ferritic, martensitic, and precipitation-hardening stainless steel foils. From the viewpoint of providing a battery packaging material having even superior moldability, the stainless steel foil is preferably formed of austenitic stainless steel.

Specific examples of the austenitic stainless steel constituting the stainless steel foil include SUS 304, SUS 301, and SUS 316L, and SUS 304 is particularly preferred.

While the thickness of the barrier layer 3 is not particularly limited as long as the barrier function for water vapor and the like is achieved, it is preferably about 100 μm or less, more preferably about 10 to 100 μm, still more preferably about 10 to 80 μm, even more preferably about 20 to 50 μm, and still more preferably about 30 to 50 μm, from the viewpoint of reducing the thickness of the battery packaging material.

Moreover, preferably, at least one surface, preferably both surfaces, of the barrier layer 3 is/are subjected to a chemical conversion treatment, in order to stabilize the adhesion, and prevent dissolution or corrosion, for example. As used herein, the "chemical conversion treatment" refers to a treatment for forming an acid resistance film on a surface of the barrier layer. Examples of the chemical conversion treatment include a chromate treatment using a chromium compound, such as chromium nitrate, chromium fluoride, chromium sulfate, chromium acetate, chromium oxalate, chromium biphosphate, acetylacetate chromate, chromium chloride, or chromium potassium sulfate; a phosphoric acid treatment using a phosphoric acid compound, such as sodium phosphate, potassium phosphate, ammonium phosphate, or polyphosphoric acid; and a chromate treatment using an aminated phenol polymer having any of the repeating units represented by the following general formulae (1) to (4). The aminated phenol polymer may contain the repeating units represented by the following general formulae (1) to (4) alone or in any combinations of two or more.

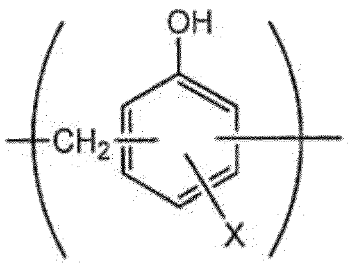

(1)

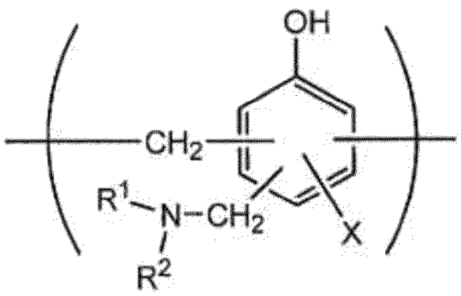

(2)

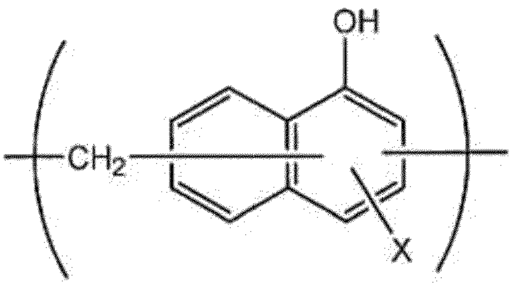

(3)

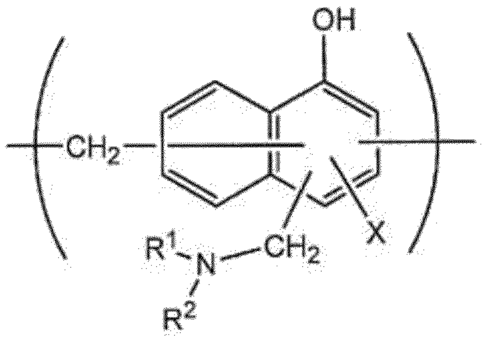

(4)

In the general formulae (1) to (4), X represents a hydrogen atom, a hydroxy group, an alkyl group, a hydroxyalkyl group, an allyl group, or a benzyl group. $R^1$ and $R^2$ are the same or different, and each represent a hydroxy group, an alkyl group, or a hydroxyalkyl group. In the general formulae (1) to (4), examples of the alkyl groups represented by X, $R^1$, and $R^2$ include linear or branched alkyl groups having 1 to 4 carbon atoms, such as a methyl group, an ethyl group, a n-propyl group, an isopropyl group, a n-butyl group, an isobutyl group, and a tert-butyl group. Examples of the hydroxyalkyl groups represented by X, $R^1$, and $R^2$ include linear or branched alkyl groups having 1 to 4 carbon atoms, which are substituted with one hydroxy group, such as a hydroxymethyl group, a 1-hydroxyethyl group, a 2-hydroxyethyl group, a 1-hydroxypropyl group, a 2-hydroxypropyl group, a 3-hydroxypropyl group, a 1-hydroxybutyl group, a 2-hydroxybutyl group, a 3-hydroxybutyl group, and a 4-hydroxybutyl group. In the general formulae (1) to (4), the alkyl groups and the hydroxyalkyl groups represented by X, $R^1$ and $R^2$ may be the same or different. In the general formulae (1) to (4), X is preferably a hydrogen atom, a hydroxy group, or a hydroxyalkyl group. The number average molecular weight of the aminated phenol polymer having any of the repeating units represented by the general formulae (1) to (4) is preferably about 500 to 1,000,000, and more preferably about 1,000 to 20,000, for example.

Examples of the chemical conversion treatment method for imparting corrosion resistance to the barrier layer 3 include a method in which the barrier layer 3 is coated with a dispersion of fine particles of barium sulfate or a metal oxide such as aluminum oxide, titanium oxide, cerium oxide, or tin oxide in phosphoric acid, and subjected to a baking treatment at 150°C or higher to form an acid resistance film on a surface of the barrier layer 3. A resin layer obtained by crosslinking a cationic polymer with a crosslinking agent may also be formed on the acid resistance film. Examples of the cationic polymer herein include polyethyleneimine, ion polymer complexes composed of polymers containing polyethyleneimine and carboxylic acids, primary amine-grafted acrylic resins obtained by grafting primary amines to an acrylic backbone, polyallylamine or derivatives thereof, and aminophenol. These cationic polymers may be used alone or in combinations of two or more. Examples of the crosslinking agent include silane coupling agents and compounds having at least one functional group selected from the group consisting of an isocyanate group, a glycidyl group, a carboxyl group, and an oxazoline group. These crosslinking agents may be used alone or in combinations of two or more.

One example of a specific method for providing the acid resistance film is as follows: Initially, at least the inner layer-side surface of the aluminum alloy foil is subjected to a degreasing treatment, using a well-known treatment method such as an alkali immersion method, an electrolytic cleaning method, an acid cleaning method, an electrolytic acid cleaning method, or an acid activation method. Then, a treatment solution (aqueous solution) containing, as a main component, a phosphoric acid metal salt, such as chromium phosphate, titanium phosphate, zirconium phosphate, or zinc phosphate, or a mixture of these metal salts, or a treatment solution (aqueous solution) containing, as a main component, a phosphoric acid non-metal salt or a mixture of such non-metal salts, or a treatment solution (aqueous solution) containing a mixture of any of the above and an aqueous synthetic resin, such as an acrylic-based resin, a phenol-based resin, or a urethane-based resin, is applied to the degreasing-treated surface, using a well-known coating method such as a roll coating method, a gravure printing method, or an immersion method. As a result, an acid resistance film can be formed. For example, when the treatment is performed using a chromium phosphate-based treatment solution, an acid resistance film composed of chromium phosphate, aluminum phosphate, aluminum oxide, aluminum hydroxide, aluminum fluoride, and the like is formed. When the treatment is performed using a zinc phosphate-based treatment solution, an acid resistance film composed of zinc phosphate hydrate, aluminum phosphate, aluminum oxide, aluminum hydroxide, aluminum fluoride, and the like is formed.

Another example of a specific method for providing the acid resistance film is as follows: Initially, at least the inner layer-side surface of the aluminum alloy foil is subjected to a degreasing treatment, using a well-known treatment method such as an alkali immersion method, an electrolytic cleaning method, an acid cleaning method, an electrolytic acid cleaning method, or an acid activation method. Then, the degreasing-treated surface is subjected to a well-known anodization treatment. As a result, an acid resistance film can be formed.

Other examples of the acid resistance film include phosphate-based films and chromate-based films. Examples of phosphates include zinc phosphate, iron phosphate, manganese phosphate, calcium phosphate, and chromium

phosphate; and examples of chromates include chromium chromate.

Other examples of the acid resistance film include acid resistance films composed of phosphates, chromates, fluorides, triazine-thiol compounds, and the like. When such an acid resistance film is formed, it prevents delamination between aluminum and the base material layer during embossing molding, and prevents dissolution or corrosion of the aluminum surface, particularly dissolution or corrosion of aluminum oxide present on the surface of aluminum, due to hydrogen fluoride produced by the reaction between the electrolyte and moisture. Such an acid resistance film also improves the adhesion (wettability) of the aluminum surface, and exhibits the effect of preventing delamination between the base material layer and aluminum during heat sealing, or the effect of preventing delamination between the base material layer and aluminum during press molding in the case of embossed-type products. Among the materials that form the acid resistance film, an aqueous solution composed of three components, i.e., a phenol resin, a chromium(III) fluoride compound, and phosphoric acid, is preferably applied to the aluminum surface, and subjected to a drying and baking treatment.

The acid resistance film may also include a layer containing cerium oxide, phosphoric acid or a phosphate, an anionic polymer, and a crosslinking agent that crosslinks the anionic polymer, wherein the phosphoric acid or phosphate may be blended in an amount of about 1 to 100 parts by mass, per 100 parts by mass of the cerium oxide. The acid resistance film preferably has a multilayer structure that further includes a layer containing a cationic polymer and a crosslinking agent that crosslinks the cationic polymer.

The anionic polymer is preferably a copolymer that contains, as a main component, poly(meth)acrylic acid or a salt thereof, or (meth)acrylic acid or a salt thereof. The crosslinking agent is preferably at least one selected from the group consisting of silane coupling agents and compounds having, as a functional group, any of an isocyanate group, a glycidyl group, a carboxyl group, and an oxazoline group.

The phosphoric acid or phosphate is preferably condensed phosphoric acid or a condensed phosphate.

These chemical conversion treatments may be performed alone or in combinations of two or more. Furthermore, these chemical conversion treatments may be performed using one compound alone, or using two or more compounds in combination. Preferred among these chemical conversion treatments is, for example, a chromate treatment, or a chemical conversion treatment using a chromium compound, a phosphoric acid compound, and the aminated phenol polymer in combination. Among the chromium compounds, a chromic acid compound is preferred.

Specific examples of the acid resistance film include an acid resistance film containing at least one of a phosphate, a chromate, a fluoride, and a triazine-thiol. An acid resistance film containing a cerium compound is also preferred. The cerium compound is preferably cerium oxide.

Specific examples of the acid resistance film also include phosphate-based films, chromate-based films, fluoride-based films, and triazine-thiol compound films. These acid resistance films may be used alone or in combinations of two or more. The acid resistance film may also be an acid resistance film that is formed by subjecting the chemical conversion-treated surface of the aluminum alloy foil to a degreasing treatment, and then treating the degreasing-treated surface with a treatment solution containing a mixture of a phosphoric acid metal salt and an aqueous synthetic resin or a treatment solution containing a mixture of a phosphoric acid non-metal salt and an aqueous synthetic resin.

Analysis of the composition of the acid resistance film can be performed using time-of-flight secondary ion mass spectrometry, for example. As a result of the analysis of the composition of the acid resistance film using time-of-flight secondary ion mass spectrometry, a peak derived from at least one of $Ce^+$ and $Cr^+$, for example, is detected.

The aluminum alloy foil preferably includes, on a surface thereof, an acid resistance film containing at least one element selected from the group consisting of phosphorus, chromium, and cerium. The inclusion of at least one element selected from the group consisting of phosphorus, chromium, and cerium in the acid resistance film on the surface of the aluminum alloy foil of the battery packaging material can be confirmed using X-ray photoelectron spectroscopy. Specifically, initially, in the battery packaging material, the heat-sealable resin layer, the adhesive agent layer, and the like laminated on the aluminum alloy foil are physically removed. Subsequently, the aluminum alloy foil is placed in an electric furnace at about 300°C for about 30 minutes to eliminate organic components present on the surface of the aluminum alloy foil. Then, the inclusion of these elements is confirmed using X-ray photoelectron spectroscopy on the surface of the aluminum alloy foil.

The amount of the acid resistance film to be formed on the surface of the barrier layer 3 in the chemical conversion treatment is not particularly limited; for example, when the above-described chromate treatment is performed, it is preferred that the chromium compound be contained in an amount of about 0.5 to 50 mg, preferably about 1.0 to 40 mg, calculated as chromium, the phosphorus compound be contained in an amount of about 0.5 to 50 mg, preferably about 1.0 to 40 mg, calculated as phosphorus, and the aminated phenol polymer be contained in an amount of about 1.0 to 200 mg, preferably about 5.0 to 150 mg, per $m^2$ of the surface of the barrier layer 3.

While the thickness of the acid resistance film is not particularly limited, it is preferably about 1 nm to 10 $\mu$m, more preferably about 1 to 100 nm, and still more preferably about 1 to 50 nm, for example, from the viewpoint of the cohesive force of the film, and the adhesion force between the acid resistance film and the barrier layer 3 or the heat-sealable resin layer. The thickness of the acid resistance film can be measured by observation with a transmission

electron microscope, or a combination thereof with energy dispersive X-ray spectroscopy or electron energy loss spectroscopy.

The chemical conversion treatment is performed by applying the compound-containing solution to be used for forming the acid resistance film to a surface of the barrier layer, using a bar coating method, a roll coating method, a gravure coating method, an immersion method, or the like, followed by heating such that the temperature of the barrier layer is elevated to about 70 to 200°C. Moreover, before the barrier layer is subjected to the chemical conversion treatment, the barrier layer may be subjected to a degreasing treatment using an alkali immersion method, an electrolytic cleaning method, an acid cleaning method, an electrolytic acid cleaning method, or the like. The degreasing treatment allows the chemical conversion treatment of the surface of the barrier layer to be more efficiently performed.

[Heat-Sealable Resin Layer 4]

Concerning the heat-sealable resin layer 4, matters common among the first to third embodiments will be described first, and matters characteristic of each of the embodiments will be described in the section of each embodiment.

In the battery packaging material of the present invention, the heat-sealable resin layer 4 is a layer that corresponds to an innermost layer, and is heat-sealed with itself during the assembly of a battery to hermetically seal the battery elements.

While the resin component to be used for the heat-sealable resin layer 4 is not particularly limited as long as it can be heat-sealed, examples include a polyolefin, a cyclic polyolefin, an acid-modified polyolefin, and an acid-modified cyclic polyolefin. That is, the heat-sealable resin layer 4 may contain a polyolefin backbone, and preferably contains a polyolefin backbone. The inclusion of the polyolefin backbone in the heat-sealable resin layer 4 can be analyzed by, for example, infrared spectroscopy or gas chromatography-mass spectrometry, although the analytical method is not particularly limited. For example, when a maleic anhydride-modified polyolefin is measured by infrared spectroscopy, peaks derived from maleic anhydride are detected at a wavelength of around 1760 $cm^{-1}$ and a wavelength of around 1780 $cm^{-1}$. However, if the degree of acid modification is low, the peaks may be so small that they cannot be detected. In that case, the analysis can be performed by nuclear magnetic resonance spectroscopy.

Specific examples of the polyolefin include polyethylene, such as low-density polyethylene, medium-density polyethylene, high-density polyethylene, and linear low-density polyethylene; polypropylene, such as homopolypropylene, block copolymers of polypropylene (for example, block copolymers of propylene and ethylene), and random copolymers of polypropylene (for example, random copolymers of propylene and ethylene); and terpolymers of ethylene-butene-propylene. Among these polyolefins, polyethylene and polypropylene are preferred.

The cyclic polyolefin is a copolymer of an olefin and a cyclic monomer. Examples of the olefin as a constituent monomer of the cyclic polyolefin include ethylene, propylene, 4-methyl-1-pentene, butadiene, and isoprene. Examples of the cyclic monomer as a constituent monomer of the cyclic polyolefin include cyclic alkenes, such as norbornene; specifically, cyclic dienes, such as cyclopentadiene, dicyclopentadiene, cyclohexadiene, and norbornadiene. Among these polyolefins, cyclic alkenes are preferred, and norbornene is more preferred.

The acid-modified polyolefin is a polymer obtained by modifying the polyolefin by block polymerization or graft polymerization with an acid component, such as a carboxylic acid. Examples of the acid component to be used for the modification include carboxylic acids, such as maleic acid, acrylic acid, itaconic acid, crotonic acid, maleic anhydride, and itaconic anhydride, or anhydrides thereof.

The acid-modified cyclic polyolefin is a polymer obtained by replacing a portion of the monomers constituting the cyclic polyolefin with an $\alpha,\beta$-unsaturated carboxylic acid or an anhydride thereof, and copolymerizing them, or by block-polymerizing or graft-polymerizing an $\alpha,\beta$-unsaturated carboxylic acid or an anhydride thereof onto the cyclic polyolefin. The cyclic polyolefin to be modified with a carboxylic acid is the same as described above. The carboxylic acid to be used for the modification is the same as the acid component used for the modification of the polyolefin.

Among these resin components, preferred is a polyolefin, such as polypropylene, or a carboxylic acid-modified polyolefin; and more preferred is polypropylene or acid-modified polypropylene.

The heat-sealable resin layer 4 may be formed using one resin component alone, or may be formed using a blend polymer obtained by combining two or more resin components. Furthermore, the heat-sealable resin layer 4 may be formed of only one layer, or two or more layers composed of the same resin component or different resin components.

A lubricant may be contained in the heat-sealable resin layer 4. Moreover, the lubricant present on the surface of the heat-sealable resin layer 4 may be the lubricant that is contained in the resin constituting the heat-sealable resin layer 4 and exuded therefrom, or may be the lubricant applied to the surface of the heat-sealable resin layer 4.

<u>(1) Concerning the First Embodiment</u>

In the first embodiment, the heat-sealable resin layer 4 preferably contains a lubricant, from the viewpoint of improving the moldability of the battery packaging material. When the heat-sealable resin layer 4 contains a lubricant,

the lubricant may be present inside or on the surface of the heat-sealable resin layer 4, or both inside and on the surface of the heat-sealable resin layer 4.

While the lubricant is not particularly limited, it is preferably an amide-based lubricant, for example. Specific examples of the amide-based lubricant include saturated fatty acid amides, unsaturated fatty acid amides, substituted amides, methylol amides, saturated fatty acid bis-amides, and unsaturated fatty acid bis-amides. Specific examples of saturated fatty acid amides include lauramide, palmitamide, stearamide, behenamide, and hydroxystearamide. Specific examples of unsaturated fatty acid amides include oleamide and erucamide. Specific examples of substituted amides include N-oleyl palmitamide, N-stearyl stearamide, N-stearyl oleamide, N-oleyl stearamide, and N-stearyl erucamide. Specific examples of methylol amides include methylol stearamide. Specific examples of saturated fatty acid bis-amides include methylene-bis-stearamide, ethylene-bis-capramide, ethylene-bis-lauramide, ethylene-bis-stearamide, ethylene-bis-hydroxystearamide, ethylene-bis-behenamide, hexamethylene-bis-stearamide, hexamethylene-bis-behenamide, hexamethylene hydroxystearamide, N,N'-distearyl adipamide, and N,N'-distearyl sebacamide. Specific examples of unsaturated fatty acid bis-amides include ethylene-bis-oleamide, ethylene-bis-erucamide, hexamethylene-bis-oleamide, N,N'-dioleyl adipamide, and N,N'-dioleyl sebacamide. Specific examples of fatty acid ester amides include stearamide ethyl stearate. Specific examples of aromatic bis-amides include m-xylylene-bis-stearamide, m-xylylene-bis-hydroxystearamide, and N,N'-distearyl isophthalamide. These lubricants may be used alone or in combinations of two or more.

When a lubricant is present on the surface of the heat-sealable resin layer 4, the amount of the lubricant present is not particularly limited, but is preferably about 3 $mg/m^2$ or more, more preferably about 4 to 15 $mg/m^2$, and still more preferably about 5 to 14 $mg/m^2$.

The lubricant present on the surface of the heat-sealable resin layer 4 may be the lubricant that is contained in the resin constituting the heat-sealable resin layer 4 and exuded therefrom, or may be the lubricant applied to the surface of the heat-sealable resin layer 4.

In the first embodiment, while the thickness of the heat-sealable resin layer 4 is not particularly limited as long as the function as a heat-sealable resin layer is achieved, it is preferably about 60 μm or less, more preferably about 15 to 60 μm, still more preferably about 15 to 45 μm, and even more preferably about 15 to 40 μm.

(2) Concerning the Second Embodiment

The second embodiment of the present invention is characterized in that, when a temperature difference $T_1$ and a temperature difference $T_2$ are measured using the following methods, a value obtained by dividing the temperature difference $T_2$ by the temperature difference $T_1$ ($T_2/T_1$ ratio) is 0.60 or more. As is understood from the measurements of the temperature differences $T_1$ and $T_2$ described below, as the $T_2/T_1$ ratio becomes closer to an upper limit of 1.0, the change in the width between the onset point (extrapolated melting onset temperature) and the end point (extrapolated melting end temperature) of the melting peak, before and after the heat-sealable resin layer is contacted with the electrolytic solution, becomes smaller (see the schematic diagram of Fig. 11). That is, the value of $T_2$ is usually not more than the value of $T_1$. One reason that the change in the width between the extrapolated melting onset temperature and the extrapolated melting end temperature of the melting peak increases is that when a low-molecular-weight resin included in the resin constituting the heat-sealable resin layer is contacted with the electrolytic solution, the resin is eluted into the electrolytic solution, and the width between the extrapolated melting onset temperature and the extrapolated melting end temperature of the melting peak of the heat-sealable resin layer after contact with the electrolytic solution becomes smaller than that before contact with the electrolytic solution. One example of the method for reducing the change in the width between the extrapolated melting onset temperature and the extrapolated melting end temperature of the melting peak is a method in which the proportion of the low-molecular-weight resin included in the resin constituting the heat-sealable resin layer is adjusted.

(Measurement of Temperature Difference $T_1$)

In accordance with JIS K 7121: 2012, using differential scanning calorimetry (DSC), a DSC curve is obtained for polypropylene used as the heat-sealable resin layer of each of the battery packaging materials described above. Based on the obtained DSC curve, the temperature difference $T_1$ between the extrapolated melting onset temperature and the extrapolated melting end temperature of the melting peak temperature of the heat-sealable resin layer is measured.

(Measurement of Temperature Difference $T_2$)

In an environment at a temperature of 85°C, the polypropylene used as the heat-sealable resin layer is allowed to stand for 72 hours in an electrolytic solution, which is a solution having a lithium hexafluorophosphate concentration of 1 mol/l, and a volume ratio of ethylene carbonate, diethyl carbonate, and dimethyl carbonate of 1:1:1, and then

sufficiently dried. Subsequently, in accordance with JIS K 7121: 2012, using differential scanning calorimetry (DSC), a DSC curve is obtained for the polypropylene after drying. Subsequently, based on the obtained DSC curve, the temperature difference $T_2$ between the extrapolated melting onset temperature and the extrapolated melting end temperature of the melting peak temperature of the heat-sealable resin layer after drying is measured.

In the measurement of the extrapolated melting onset temperature and the extrapolated melting end temperature of the melting peak temperature, a commercially available differential scanning calorimeter may be used. As for the DSC curve, the test sample is held at -50°C for 10 minutes, and then heated to 200°C at a heating rate of 10°C/minute (first time) and held at 200°C for 10 minutes, and then cooled to -50°C at a cooling rate of -10°C/minute and held at -50°C for 10 minutes, and then heated to 200°C at a heating rate of 10°C/minute (second time) and held at 200°C for 10 minutes. As the DSC curve, a DSC curve obtained when the test sample is heated to 200°C for the second time is used. Moreover, for the measurement of the temperature difference $T_1$ and the temperature difference $T_2$, in the DSC curve for each, among melting peaks that appear in the range of 120 to 160°C, the melting peak having the maximum difference in thermal energy input is analyzed. Even when two or more overlapping peaks are present, only the melting peak having the maximum difference in thermal energy input is analyzed.

The extrapolated melting onset temperature refers to the onset point of the melting peak temperature, and is defined as the temperature at the intersection point between the straight line formed by extending the lower temperature (65 to 75°C)-side baseline to the higher temperature side, and the tangent drawn at the point having the maximum gradient to the lower temperature-side curve of the melting peak having the maximum difference in thermal energy input. The extrapolated melting end temperature refers to the end point of the melting peak temperature, and is defined as the temperature at the intersection point between the straight line formed by extending the higher temperature (170°C)-side baseline to the lower temperature side, and the tangent drawn at the point having the maximum gradient to the higher temperature-side curve of the melting peak having the maximum difference in thermal energy input.

In the second embodiment of the present invention, from the viewpoint of achieving an even higher sealing strength by means of heat sealing, even when an electrolytic solution is contacted with the heat-sealable resin layer in a high-temperature environment, and the heat-sealable resin layer is heat-sealed with itself, with the electrolytic solution being attached to the heat-sealable resin layer, the value obtained by dividing the temperature difference $T_2$ by the temperature difference $T_1$ ($T_2/T_1$ ratio) is preferably 0.70 or more, and more preferably 0.75 or more, and preferred ranges include from about 0.70 to 1.0 and from about 0.75 to 1.0. The upper limit of the $T_2/T_1$ ratio is, for example, 1.0. In order to set the $T_2/T_1$ ratio as described above, for example, the type, the composition, the molecular weight, and the like of the resin constituting the heat-sealable resin layer 4 are adjusted.

Moreover, in the second embodiment, from the viewpoint of achieving an even higher sealing strength by means of heat sealing, even when an electrolytic solution is contacted with the heat-sealable resin layer in a high-temperature environment, and the heat-sealable resin layer is heat-sealed with itself, with the electrolytic solution being attached to the heat-sealable resin layer, the absolute value of the difference $|T_2 - T_1|$ between the temperature difference $T_2$ and the temperature difference $T_1$ is preferably about 10°C or less, more preferably about 8°C or less, and still more preferably about 7.5°C or less, and preferred ranges include from about 0 to 10°C, from about 0 to 8°C, from about 0 to 7.5°C, from about 1 to 10°C, from about 1 to 8°C, from about 1 to 7.5°C, from about 2 to 10°C, from about 2 to 8°C, from about 2 to 7.5°C, from about 5 to 10°C, from about 5 to 8°C, and from about 5 to 7.5°C. The lower limit of the absolute value of the difference $|T_2 - T_1|$ is, for example, 0, 1, 2, or 5°C. In order to set the absolute value of the difference $|T_2 - T_1|$ as described above, for example, the type, the composition, the molecular weight, and the like of the resin constituting the heat-sealable resin layer 4 are adjusted.

In the second embodiment, the temperature difference $T_1$ is preferably about 31 to 38°C, and more preferably about 32 to 36°C. The temperature difference $T_2$ is preferably about 25 to 30°C, and more preferably about 26 to 29°C. In order to set the temperature differences $T_1$ and $T_2$ as described above, for example, the type, the composition, the molecular weight, and the like of the resin constituting the heat-sealable resin layer 4 are adjusted.

In the second embodiment, in the measurement of the temperature difference $T_1$, the extrapolated melting onset temperature of the melting peak temperature of the heat-sealable resin layer is, for example, about 123 to 130°C, and the extrapolated melting end temperature is, for example, about 156 to 165°C. In the measurement of the temperature difference $T_1$, the extrapolated melting onset temperature of the melting peak temperature of the heat-sealable resin layer is, for example, about 125 to 132°C, and the extrapolated melting end temperature is, for example, about 151 to 160°C.

In the second embodiment, as in the first embodiment, the heat-sealable resin layer 4 preferably contains a lubricant, from the viewpoint of improving the moldability of the battery packaging material. When the heat-sealable resin layer 4 contains a lubricant, the lubricant may be present inside or on the surface of the heat-sealable resin layer 4, or both inside and on the surface of the heat-sealable resin layer 4. In the second embodiment, preferred examples of the lubricant include the same lubricants as those mentioned in the first embodiment.

When a lubricant is present on the surface of the heat-sealable resin layer 4, the amount of the lubricant present is not particularly limited, but is preferably about 3 mg/m$^2$ or more, more preferably about 4 to 15 mg/m$^2$, and still more

preferably about 5 to 14 mg/m$^2$.

The lubricant present on the surface of the heat-sealable resin layer 4 may be the lubricant that is contained in the resin constituting the heat-sealable resin layer 4 and exuded therefrom, or may be the lubricant applied to the surface of the heat-sealable resin layer 4.

In the second embodiment, the thickness of the heat-sealable resin layer 4 is not particularly limited as long as the function as a heat-sealable resin layer is achieved; however, from the viewpoint of achieving an even higher sealing strength by means of heat sealing, even when an electrolytic solution is contacted with the heat-sealable resin layer in a high-temperature environment, and the heat-sealable resin layer is heat-sealed with itself, with the electrolytic solution being attached to the heat-sealable resin layer, the lower limit is preferably about 10 μm or more, and more preferably about 15 μm or more, and the upper limit is preferably about 60 μm or less, and more preferably about 45 μm or less. Preferred ranges of the thickness of the heat-sealable resin layer include from about 10 to 60 μm, from about 10 to 45 μm, from about 15 to 60 μm, and from about 15 to 45 μm.

(3) Concerning the Third Embodiment

The third embodiment of the present invention is characterized in that the heat-sealable resin layer 4 contains a lubricant, and the heat-sealable resin layer 4 has a tensile elastic modulus in a range of 500 to 1000 MPa. As described above, when a mold made of stainless steel having high surface smoothness (for example, a mold having a surface Rz (maximum height of roughness profile) of 0.8 μm, as specified in Table 2 of JIS B 0659-1: 2002 Appendix 1 (Referential) Surface Roughness Standard Specimens for Comparison) is used as the mold for molding the battery packaging material, there is a problem in that the area of contact between the mold and the heat-sealable resin layer 4 is large, and thus, the lubricant positioned on the surface of the heat-sealable resin layer 4 is likely to be abraded, which is likely to cause the lubricant positioned on the surface portion of the heat-sealable resin layer 4 to be transferred to the mold, and consequently, the mold is contaminated, and the continuous productivity of batteries is reduced. On the other hand, in the battery packaging material according to the third embodiment of the present invention, because the tensile elastic modulus of the heat-sealable resin layer 4 is in the specific range as defined above, even when the battery packaging material is molded with a mold having high surface smoothness, the lubricant positioned on the surface of the heat-sealable resin layer 4 is unlikely to be abraded, and thus, contamination of the mold during molding of the battery packaging material is prevented, and a high sealing strength can be achieved by means of heat sealing. In particular, because the tensile elastic modulus of the heat-sealable resin layer 4 is 500 MPa or more, contamination of the mold during molding is effectively prevented. That is, because the tensile elastic modulus of the heat-sealable resin layer 4 is 500 MPa or more, the lubricant positioned on the surface of the heat-sealable resin layer 4 is unlikely to be abraded by the mold, and thus, the lubricant positioned on the surface portion of the heat-sealable resin layer 4 is unlikely to be transferred to the mold, which effectively prevents contamination of the mold. Moreover, because the tensile elastic modulus of the heat-sealable resin layer 4 is 1000 MPa or less, a high sealing strength is achieved by means of heat sealing. That is, because the tensile elastic modulus of the heat-sealable resin layer 4 is 1000 MPa or less, the heat-sealable resin layer 4 is unlikely to become brittle, and thus, a high sealing strength is achieved by means of heat sealing. If the tensile elastic modulus of the heat-sealable resin layer 4 is over 1000 MPa, the heat-sealable resin layer 4 is likely to become brittle, and peel off from the barrier layer 3 on which it is laminated with the adhesive layer 5 being sandwiched therebetween. This may reduce the sealing strength, or cause whitening or cracks in a stretched portion stretched by the cold forming step to reduce the battery performance. Moreover, if the tensile elastic modulus of the heat-sealable resin layer 4 is over 1000 MPa, extrudability will decrease, which causes productivity to decrease. In the battery packaging material of the present invention, therefore, because the tensile elastic modulus of the heat-sealable resin layer 4 is in the range of 500 to 1000 MPa, the effect of preventing contamination of the mold and the effect of improving the sealing strength by means of heat sealing are achieved well. The tensile elastic modulus of the heat-sealable resin layer 4 can be adjusted by adjusting the molecular weight, the melt mass-flow rate (MFR), and the like of the resin constituting the heat-sealable resin layer 4.

In the third embodiment, from the viewpoint of achieving a higher sealing strength by means of heat sealing, while preventing contamination of the mold during molding even more effectively, the tensile elastic modulus of the heat-sealable resin layer 4 is preferably about 500 to 800 MPa, more preferably about 500 to 750 MPa, still more preferably about 500 to 700 MPa, and particularly preferably about 510 to 700 MPa. In order to set the tensile elastic modulus as described above, for example, the type, the composition, the molecular weight, and the like of the resin constituting the heat-sealable resin layer 4 are adjusted.

In the third embodiment, the tensile elastic modulus of the heat-sealable resin layer 4 is the value measured in accordance with JIS K 7161: 2014.

In the third embodiment, from the viewpoint of improving the moldability, while preventing contamination of the mold during molding even more effectively, the dynamic friction coefficient between the heat-sealable resin layer 4 and a stainless steel plate (having a surface with an Rz (maximum height of roughness profile) of 0.8 μm, as specified in

Table 2 of JIS B 0659-1: 2002 Appendix 1 (Referential) Surface Roughness Standard Specimens for Comparison), is preferably 0.25 or less, more preferably 0.20 or less, and still more preferably 0.17 or less. The lower limit of the dynamic friction coefficient is usually 0.08. Examples of preferred ranges of the dynamic friction coefficient include from about 0.08 to 0.25, from about 0.08 to 0.20, and from about 0.08 to 0.17. A specific method for measuring the dynamic friction coefficient will be described in the Examples.

In the third embodiment, the heat-sealable resin layer 4 contains a lubricant, and when the battery packaging material according to the third embodiment is subjected to molding, the lubricant is present on the surface of the heat-sealable resin layer 4. While the amount of the lubricant present on the surface of the heat-sealable resin layer 4 is not particularly limited, it is preferably about 3 $mg/m^2$ or more, more preferably about 4 to 15 $mg/m^2$, and still more preferably about 5 to 14 $mg/m^2$. By setting the amount of the lubricant present on the surface of the heat-sealable resin layer 4 in the range of values as defined above, for example, the above-described dynamic friction coefficient can be suitably adjusted to 0.25 or less. The amount of the lubricant present on the surface of each of the heat-sealable resin layer and the base material layer can be quantified by washing a predetermined area of the surface of the heat-sealable resin layer or the base material layer with a solvent, and quantifying the amount of the lubricant contained in the resulting wash liquid (solvent), using a gas chromatograph-mass spectrometer (GC-MS).

In the third embodiment, preferred examples of the lubricant include the same lubricants as those mentioned in the first embodiment.

The lubricant present on the surface of the heat-sealable resin layer 4 may be the lubricant that is contained in the resin constituting the heat-sealable resin layer 4 and exuded therefrom, or may be the lubricant applied to the surface of the heat-sealable resin layer 4.

In the third embodiment, the thickness of the heat-sealable resin layer 4 is not particularly limited as long as the function as a heat-sealable resin layer is achieved; however, from the viewpoint of achieving an even higher sealing strength by means of heat sealing, the lower limit is preferably about 30 μm or more, and more preferably about 35 μm or more, and the upper limit is preferably about 60 μm or less, and more preferably about 45 μm or less. Preferred ranges of the thickness of the heat-sealable resin layer include from about 30 to 60 μm, from about 30 to 45 μm, from about 35 to 60 μm, and from about 35 to 45μm.

[Adhesive Layer 5]

<u>(1) Concerning the First Embodiment</u>

In the battery packaging material according to the first embodiment of the present invention, the adhesive layer 5 is a layer that is provided to strongly bond the barrier layer 3 and the heat-sealable resin layer 4, and achieve a high sealing strength in a high-temperature environment. On the other hand, in the second and third embodiments, the adhesive layer 5 is a layer that is optionally provided between the barrier layer 3 and the heat-sealable resin layer 4 to strongly bond these layers.

The first embodiment of the present invention is characterized in that the adhesive layer 5 has a logarithmic decrement ΔE of 2.0 or less at 120°C according to rigid-body pendulum measurement. In the present invention, because the logarithmic decrement ΔE at 120°C is 2.0 or less, at the time of sealing the battery elements with the battery packaging material, crushing of the adhesive layer is effectively prevented when the heat-sealable resin layer is heat-sealed with itself, and a high sealing strength is achieved in a high-temperature environment.

The logarithmic decrement at 120°C according to rigid-body pendulum measurement is an index that represents the hardness of the resin in a high-temperature environment at 120°C; as the logarithmic decrement decreases, the hardness of the resin increases. In the rigid-body pendulum measurement, the decrement of the pendulum is measured while increasing the temperature of the resin from a lower temperature to a higher temperature. In general, in the rigid-body pendulum measurement, an edge portion is contacted with the surface of the object to be measured, and pendulum movement is performed in a horizontal direction to impart vibrations to the object to be measured. In the first embodiment of the present invention, the adhesive layer 5, which has a logarithmic decrement of 2.0 or less in a high-temperature environment at 120°C, and is thereby hard, is disposed between the barrier layer 3 and the heat-sealable resin layer 4, so that crushing (thinning) of the adhesive layer 5 at the time of heat-sealing the battery packaging material is prevented, and a high sealing strength can be achieved in the high-temperature environment.

The logarithmic decrement ΔE is calculated based on the following equation:

$$\Delta E = [\ln(A1/A2) + \ln(A2/A3) + \ldots \ln(An/An + 1)]/n$$

A: amplitude
n: wavenumber

In the battery packaging material according to the first embodiment of the present invention, from the viewpoint of effectively preventing crushing of the adhesive layer 5 when the heat-sealable resin layer 4 is heat-sealed with itself, and achieving a high sealing strength in a high-temperature environment, the logarithmic decrement ΔE at 120°C is preferably about 1.4 to 2.0, and more preferably about 1.4 to 1.6. In order to set the logarithmic decrement ΔE as described above, for example, the type, the composition, the molecular weight, and the like of the resin constituting the adhesive layer 5 are adjusted.

In the measurement of the logarithmic decrement ΔE, a commercially available rigid-body pendulum-type physical property tester is used to perform a rigid-body pendulum physical property test on the adhesive layer 5, using a cylindrical edge as the edge portion to be pressed against the adhesive layer 5, at an initial amplitude of 0.3 degree and a heating rate of 3°C/minute in the range of temperatures of 30 to 200°C. Then, based on the logarithmic decrement at 120°C, the criteria of the effect of the adhesive layer 5 of preventing crushing and the effect of improving the sealing strength by means of heat sealing in a high-temperature environment are established. As for the adhesive layer whose logarithmic decrement ΔE is to be measured, the battery packaging material is immersed in 15% hydrochloric acid to dissolve the base material layer and the aluminum foil, and the sample having the adhesive layer and the heat-sealable resin layer only is sufficiently dried, and then subjected to the measurement.

Moreover, the battery packaging material may be obtained from a battery to measure the logarithmic decrement ΔE of the adhesive layer 5. When the battery packaging material is obtained from a battery to measure the logarithmic decrement ΔE of the adhesive layer 5, a sample is cut out from a top surface portion of the battery packaging material that has not been stretched by molding, and the sample is subjected to the measurement.

In the battery packaging material according to the first embodiment of the present invention, after the heat-sealable resin layer of the laminate constituting the battery packaging material is opposed to itself, and heated and pressed in a laminated direction at a temperature of 190°C and a surface pressure of 2.0 MPa for a time of 3 seconds, the thickness remaining ratio of the adhesive layer is preferably 40% or more, more preferably 42% or more, and still more preferably 45% or more, and preferred ranges include from 40 to 50%, 42 to 50%, and 45 to 50%. The upper limit of the thickness remaining ratio is usually about 50%. The thickness remaining ratio is the value measured using the method described below. As the surface pressure used at the time of heat-sealing the heat-sealable resin layer with itself, a surface pressure of 2.0 MPa is higher than a generally used pressure. Under such a high pressure, if the thickness remaining ratio of the adhesive layer is 40% or more, it can be evaluated that crushing of the adhesive layer is effectively prevented when the heat-sealable resin layer is heat-sealed with itself. In order to set the thickness remaining ratio as described above, for example, the type, the composition, the molecular weight, and the like of the resin constituting the adhesive layer 5 are adjusted.

<Measurement of Thickness Remaining Ratio of Adhesive Layer>

The battery packaging material is cut into a size of 150 mm in length × 60 mm in width to prepare a test sample. Subsequently, the heat-sealable resin layer of the test sample is opposed to itself. Subsequently, in this state, using metal plates having a width of 7 mm, the heat-sealable resin layer is heated and pressed in a laminated direction from both sides of the test sample, at a temperature of 190°C and a surface pressure of 2.0 MPa for a time of 3 seconds, so that the heat-sealable resin layer is heat-sealed with itself. Subsequently, the heat-sealed portion of the test sample is cut in the laminated direction using a microtome, and the thickness of the adhesive layer is measured for the exposed cross section. Similarly, the test sample before heat sealing is cut in the laminated direction using a microtome, and the thickness of the adhesive layer is measured for the exposed cross section. The ratio of the thickness of the adhesive layer after heat sealing, relative to the thickness of the adhesive layer before heat sealing, is calculated to measure the thickness remaining ratio (%) of the adhesive layer.

Moreover, the battery packaging material may be obtained from a battery to measure the thickness remaining ratio of the adhesive layer 5. When the battery packaging material is obtained from a battery to measure the thickness remaining ratio of the adhesive layer 5, a sample is cut out from a top surface portion of the battery packaging material that has not been stretched by molding, and the sample is subjected to the measurement.

In the first embodiment, the adhesive layer 5 is formed of a resin capable of bonding the barrier layer 3 and the heat-sealable resin layer 4. While the resin constituting the adhesive layer 5 is not particularly limited as long as it has the above-described logarithmic decrement ΔE, it may be an acid-modified polyolefin, for example, from the viewpoint of effectively preventing crushing of the adhesive layer when the heat-sealable resin layer is heat-sealed with itself, and achieving a high sealing strength in a high-temperature environment. That is, in the present invention, the resin constituting the adhesive layer 5 preferably includes an acid-modified polyolefin. The resin constituting the adhesive layer 5 may contain a polyolefin backbone, and preferably contains a polyolefin backbone. The inclusion of the polyolefin backbone in the resin constituting the adhesive layer 5 can be analyzed by, for example, infrared spectroscopy or gas chromatography-mass spectrometry, although the analytical method is not particularly limited. For example, when a maleic anhydride-modified polyolefin is measured by infrared spectroscopy, peaks derived from maleic anhydride are detected at a

wavelength of around 1760 $cm^{-1}$ and a wavelength of around 1780 $cm^{-1}$. However, if the degree of acid modification is low, the peaks may be so small that they cannot be detected. In that case, the analysis can be performed by nuclear magnetic resonance spectroscopy.

The logarithmic decrement $\Delta E$ of the adhesive layer 5 can be adjusted by, for example, the melt mass-flow rate (MFR), the molecular weight, the melting point, the softening point, the molecular weight distribution, the degree of crystallinity, and the like of the resin constituting the adhesive layer 5.

In the adhesive layer 5 according to the first embodiment, the acid-modified polyolefin is a polymer obtained by modifying the polyolefin by block polymerization or graft polymerization with an acid component, such as a carboxylic acid. Examples of the acid component to be used for the modification include carboxylic acids, such as maleic acid, acrylic acid, itaconic acid, crotonic acid, maleic anhydride, and itaconic anhydride, or anhydrides thereof. Specific examples of the polyolefin include polyethylene, such as low-density polyethylene, medium-density polyethylene, high-density polyethylene, and linear low-density polyethylene; polypropylene, such as homopolypropylene, block copolymers of polypropylene (for example, block copolymers of propylene and ethylene), and random copolymers of polypropylene (for example, random copolymers of propylene and ethylene); and terpolymers of ethylene-butene-propylene. Among these polyolefins, polyethylene and polypropylene are preferred.

The acid-modified cyclic polyolefin is a polymer obtained by replacing a portion of the monomers constituting the cyclic polyolefin with an $\alpha,\beta$-unsaturated carboxylic acid or an anhydride thereof, and copolymerizing them, or by block-polymerizing or graft-polymerizing an $\alpha,\beta$-unsaturated carboxylic acid or an anhydride thereof onto the cyclic polyolefin. The cyclic polyolefin to be modified with a carboxylic acid is a copolymer of an olefin and a cyclic monomer. Examples of the olefin as a constituent monomer of the cyclic polyolefin include ethylene, propylene, 4-methyl-1-pentene, butadiene, and isoprene. Examples of the cyclic monomer as a constituent monomer of the cyclic polyolefin include cyclic alkenes, such as norbornene; specifically, cyclic dienes, such as cyclopentadiene, dicyclopentadiene, cyclohexadiene, and norbornadiene. Among these polyolefins, cyclic alkenes are preferred, and norbornene is more preferred. The same description as above applies herein. The carboxylic acid to be used for the modification is the same as the acid component used for the modification of the polyolefin.

Among these resin components, an acid-modified polyolefin is preferred, acid-modified polypropylene is more preferred, and maleic anhydride-modified polypropylene is particularly preferred.

The adhesive layer 5 according to the first embodiment may be formed using one resin component alone, or may be formed using a blend polymer obtained by combining two or more resin components.

In the first embodiment, the thickness of the adhesive layer 5 is preferably about 50 μm or less, more preferably about 2 to 50 μm, still more preferably about 10 to 45 μm, and particularly preferably about 20 to 45 μm, from the viewpoint of effectively preventing crushing of the adhesive layer when the heat-sealable resin layer is heat-sealed with itself, and achieving a high sealing strength in a high-temperature environment.

<u>(2) Concerning the Second and Third Embodiments</u>

In the second and third embodiments, the adhesive layer 5 is formed of a resin capable of bonding the barrier layer 3 and the heat-sealable resin layer 4. As the resin to be used for forming the adhesive layer 5, the same adhesives as those mentioned for the adhesive agent layer 2, in terms of adhesion mechanism, types of adhesive components, and the like, can be used. Furthermore, as the resin to be used for forming the adhesive layer 5, polyolefin-based resins mentioned above for the heat-sealable resin layer 4, such as polyolefins, cyclic polyolefins, carboxylic acid-modified polyolefins, and carboxylic acid-modified cyclic polyolefins, can be used. From the viewpoint of achieving excellent adhesion between the barrier layer 3 and the heat-sealable resin layer 4, the polyolefin is preferably a carboxylic acid-modified polyolefin, and particularly preferably carboxylic acid-modified polypropylene. That is, the adhesive layer 5 may contain a polyolefin backbone, and preferably contains a polyolefin backbone. The inclusion of the polyolefin backbone in the adhesive layer 5 can be analyzed by, for example, infrared spectroscopy or gas chromatography-mass spectrometry, although the analytical method is not particularly limited. For example, when a maleic anhydride-modified polyolefin is measured by infrared spectroscopy, peaks derived from maleic anhydride are detected at a wavelength of around 1760 $cm^{-1}$ and a wavelength of around 1780 $cm^{-1}$. However, if the degree of acid modification is low, the peaks may be so small that they cannot be detected. In that case, the analysis can be performed by nuclear magnetic resonance spectroscopy.

Furthermore, in the second and third embodiments, from the viewpoint of achieving a battery packaging material having excellent shape stability after molding, while reducing the thickness of the battery packaging material, the adhesive layer 5 may be a cured product of a resin composition containing an acid-modified polyolefin and a curing agent. Preferred examples of the acid-modified polyolefin include the same carboxylic acid-modified polyolefins and carboxylic acid-modified cyclic polyolefins as mentioned for the heat-sealable resin layer 4.

The curing agent is not particularly limited as long as it cures the acid-modified polyolefin. Examples of the curing agent include an epoxy-based curing agent, a polyfunctional isocyanate-based curing agent, a carbodiimide-based curing agent, and an oxazoline-based curing agent.

The epoxy-based curing agent is not particularly limited as long as it is a compound having at least one epoxy group. Examples of the epoxy-based curing agent include epoxy resins, such as bisphenol A diglycidyl ether, modified bisphenol A diglycidyl ether, novolac glycidyl ether, glycerol polyglycidyl ether, and polyglycerol polyglycidyl ether.

The polyfunctional isocyanate-based curing agent is not particularly limited as long as it is a compound having two or more isocyanate groups. Specific examples of the polyfunctional isocyanate-based curing agent include isophorone diisocyanate (IPDI), hexamethylene diisocyanate (HDI), tolylene diisocyanate (TDI), diphenylmethane diisocyanate (MDI), polymer or isocyanurate forms thereof, mixtures thereof, and copolymers thereof with other polymers.

The carbodiimide-based curing agent is not particularly limited as long as it is a compound having at least one carbodiimide group (-N=C=N-). The carbodiimide-based curing agent is preferably a polycarbodiimide compound having at least two carbodiimide groups.

The oxazoline-based curing agent is not particularly limited as long as it is a compound having an oxazoline backbone. Specific examples of the oxazoline-based curing agent include the Epocros series from Nippon Shokubai Co., Ltd.

In the second and third embodiments, for example, from the viewpoint of improving the adhesion between the barrier layer 3 and the heat-sealable resin layer 4 by means of the adhesive layer 5, the curing agent may be composed of two or more compounds.

In the second and third embodiments, the content of the curing agent in the resin composition that forms the adhesive layer 5 is preferably from about 0.1 to 50% by mass, more preferably from about 0.1 to 30% by mass, and still more preferably from about 0.1 to 10% by mass.

In the second and third embodiments, the thickness of the adhesive layer 5 is not particularly limited as long as the function as an adhesive layer is achieved. When any of the adhesives mentioned for the adhesive agent layer 2 is used, the thickness of the adhesive layer 5 is preferably about 1 to 10 μm, and more preferably about 1 to 5 μm, for example. When any of the resins mentioned for the heat-sealable resin layer 4 is used, the thickness of the adhesive layer 5 is preferably about 2 to 50 μm, more preferably about 10 to 45 μm, and still more preferably about 20 to 45 μm, for example. When the cured product of an acid-modified polyolefin and a curing agent is used, the thickness of the adhesive layer 5 is preferably about 30 μm or less, more preferably about 0.1 to 20 μm, and still more preferably about 0.5 to 5 μm, for example. When the adhesive layer 5 is the cured product of a resin composition containing an acid-modified polyolefin and a curing agent, the adhesive layer 5 can be formed by applying the resin composition, and curing the composition by heating or the like.

[Surface Coating Layer 6]

The surface coating layer 6 is common among the first to third embodiments. The battery packaging material of the present invention may optionally include the surface coating layer 6 on the base material layer 1 (opposite to the barrier layer 3 on the base material layer 1), for the purpose of enhancing the designability, electrolytic solution resistance, scratch resistance, and moldability, for example. The surface coating layer 6 is a layer positioned as an outermost layer upon the assembly of a battery.

The surface coating layer 6 can be formed using, for example, polyvinylidene chloride, a polyester resin, a urethane resin, an acrylic resin, or an epoxy resin. In particular, the surface coating layer 6 is preferably formed using a two-liquid curable resin. Examples of the two-liquid curable resin that forms the surface coating layer 6 include a two-liquid curable urethane resin, a two-liquid curable polyester resin, and a two-liquid curable epoxy resin. An additive may also be blended into the surface coating layer 6.

Examples of the additive include fine particles having a particle diameter of about 0.5 nm to 5 μm. While the material of the additive is not particularly limited, examples include metals, metal oxides, inorganic materials, and organic materials. Moreover, while the shape of the additive is not particularly limited, examples include a spherical shape, a fibrous shape, a plate shape, an amorphous shape, and a balloon shape. Specific examples of the additive include talc, silica, graphite, kaolin, montmorilloide, montmorillonite, synthetic mica, hydrotalcite, silica gel, zeolite, aluminum hydroxide, magnesium hydroxide, zinc oxide, magnesium oxide, aluminum oxide, neodymium oxide, antimony oxide, titanium oxide, cerium oxide, calcium sulfate, barium sulfate, calcium carbonate, calcium silicate, lithium carbonate, calcium benzoate, calcium oxalate, magnesium stearate, alumina, carbon black, carbon nanotubes, high-melting-point nylons, crosslinked acrylics, crosslinked styrene, crosslinked polyethylene, benzoguanamine, gold, aluminum, copper, and nickel. These additives may be used alone or in combinations of two or more. Among these additives, silica, barium sulfate, and titanium oxide, for example, are preferred from the viewpoint of dispersion stability, costs, and the like. The surface of the additive may be subjected to various types of surface treatments, such as an insulation treatment and a dispersibility enhancing treatment.

While the content of the additive in the surface coating layer is not particularly limited, it is preferably about 0.05 to 1.0% by mass, and more preferably about 0.1 to 0.5% by mass, for example.

Examples of the method for forming the surface coating layer 6 include, although not particularly limited to, a method in which the two-liquid curable resin for forming the surface coating layer 6 is applied to one surface of the base material layer 1. When an additive is to be blended, the additive may be mixed into the two-liquid curable resin, and then the mixture may be applied.

While the thickness of the surface coating layer 6 is not particularly limited as long as the above-described function as the surface coating layer 6 is achieved, it is about 0.5 to 10 μm, and preferably about 1 to 5 μm, for example.

3. Method for Producing Battery Packaging Material

The method for producing the battery packaging material according to the first embodiment of the present invention is not particularly limited as long as a laminate including the layers each having a predetermined composition is obtained. That is, a method for producing the battery packaging material according to the first embodiment of the present invention comprises the step of obtaining a laminate by laminating at least a base material layer, a barrier layer, an adhesive layer, and a heat-sealable resin layer in this order, wherein as the adhesive layer, an adhesive layer having a logarithmic decrement $\Delta E$ of 2.0 or less at 120°C according to rigid-body pendulum measurement is used. The structure of each of the layers of the laminate and the logarithmic decrement $\Delta E$ are as described above.

The method for producing the battery packaging material according to the second embodiment of the present invention is not particularly limited as long as a laminate including the layers each having a predetermined composition is obtained. That is, a method for producing the battery packaging material according to the second embodiment of the present invention comprises the step of obtaining a laminate by laminating at least a base material layer, a barrier layer, and a heat-sealable resin layer in this order, wherein as the heat-sealable resin layer, a heat-sealable resin layer is used in which, when a temperature difference $T_1$ and a temperature difference $T_2$ are measured using the above-described methods, a value obtained by dividing the temperature difference $T_2$ by the temperature difference $T_1$ is 0.60 or more. The structure of each of the layers of the laminate is as described above.

The method for producing the battery packaging material according to the third embodiment of the present invention is not particularly limited as long as a laminate including the layers each having a predetermined composition is obtained. That is, a method for producing the battery packaging material according to the third embodiment of the present invention comprises the step of obtaining a laminate by laminating at least a base material layer, a barrier layer, and a heat-sealable resin layer in this order, wherein the heat-sealable resin layer contains a lubricant, and, as the heat-sealable resin layer, a heat-sealable resin layer is used which has a tensile elastic modulus in a range of 500 MPa or more and 1000 MPa or less, as measured in accordance with JIS K 7161: 2014. The structure of each of the layers of the laminate is as described above.

One example of the method for producing the battery packaging material of the present invention is as follows: Initially, a laminate including the base material layer 1, the adhesive agent layer 2, and the barrier layer 3 in this order (the laminate may be hereinafter denoted as the "laminate A") is formed. Specifically, the laminate A can be formed using a dry lamination method as follows: The adhesive to be used for forming the adhesive agent layer 2 is applied to the base material layer 1, or to the barrier layer 3 whose surface(s) have been optionally subjected to a chemical conversion treatment, using a coating method such as a gravure coating method or a roll coating method, and then dried. Then, the barrier layer 3 or the base material layer 1 is laminated thereon, and the adhesive agent layer 2 is cured.

Next, the adhesive layer 5 and the heat-sealable resin layer 4 are laminated in this order on the barrier layer 3 of the laminate A. Examples of the method therefor include (1) a method in which the adhesive layer 5 and the heat-sealable resin layer 4 are laminated by co-extrusion on the barrier layer 3 of the laminate A (co-extrusion lamination method); (2) a method in which a laminate having the adhesive layer 5 and the heat-sealable resin layer 4 is separately formed, and this laminate is laminated on the barrier layer 3 of the laminate A using a thermal lamination method; (3) a method in which the adhesive for forming the adhesive layer 5 is laminated on the barrier layer 3 of the laminate A by, for example, applying the adhesive onto the barrier layer 3 using an extrusion method or solution coating, followed by drying at a high temperature and baking, and then the heat-sealable resin layer 4 formed into a sheet in advance is laminated on the adhesive layer 5 using a thermal lamination method; and (4) a method in which the melted adhesive layer 5 is poured between the barrier layer 3 of the laminate A and the heat-sealable resin layer 4 formed into a sheet (film) in advance, and simultaneously the laminate A and the heat-sealable resin layer 4 are bonded with the adhesive layer 5 sandwiched therebetween (sandwich lamination method).

When the surface coating layer 6 is to be provided, the surface coating layer 6 is laminated on the surface of the base material layer 1 opposite to the barrier layer 3. The surface coating layer 6 can be formed by, for example, applying the above-described resin for forming the surface coating layer 6 onto the surface of the base material layer 1. The order of the step of laminating the barrier layer 3 on the surface of the base material layer 1 and the step of laminating the surface coating layer 6 on the surface of the base material layer 1 is not particularly limited. For example, the surface coating layer 6 may be formed on the surface of the base material layer 1, and then the barrier layer 3 may be formed on the surface of the base material layer 1 opposite to the surface coating layer 6.

In the manner as described above, a laminate is formed that includes the optional surface coating layer 6/the base material layer 1/the optional adhesive agent layer 2/the barrier layer 3 whose surface(s) have been optionally subjected to a chemical conversion treatment/the adhesive layer 5/the heat-sealable resin layer 4. The laminate may further be subjected to a heat treatment of a heat-roll contact type, a hot-air type, or a near- or far-infrared radiation type, in order to strengthen the adhesion of the adhesive agent layer 2 or the adhesive layer 5. Such a heat treatment may be performed, for example, at 150 to 250°C for 1 to 5 minutes.
In the battery packaging material of the present invention, the layers constituting the laminate may be optionally subjected to a surface activation treatment, such as a corona treatment, a blast treatment, an oxidation treatment, or an ozone treatment, in order to improve or stabilize the film formability, the lamination processing, the suitability for final product secondary processing (pouching and embossing molding), and the like.

4. Use of Battery Packaging Material

The battery packaging material of the present invention is used as a package for hermetically sealing and housing battery elements such as a positive electrode, a negative electrode, and an electrolyte. That is, a battery can be provided by housing a battery element comprising at least a positive electrode, a negative electrode, and an electrolyte in a package formed of the battery packaging material of the present invention.
Specifically, a battery element comprising at least a positive electrode, a negative electrode, and an electrolyte is covered with the battery packaging material of the present invention such that a flange portion (region where the heat-sealable resin layer is brought into contact with itself) can be formed on the periphery of the battery element, with the metal terminal connected to each of the positive electrode and the negative electrode protruding to the outside. Then, the heat-sealable resin layer in the flange portion is heat-sealed with itself to hermetically seal the battery element. As a result, a battery is provided using the battery packaging material. When the battery element is to be housed in the package formed of the battery packaging material of the present invention, the package is formed such that the heat-sealable resin layer portion of the battery packaging material of the present invention is positioned on the inner side (surface that contacts the battery element).
The battery packaging material of the present invention may be used for either primary batteries or secondary batteries, preferably secondary batteries. While the type of secondary battery to which the battery packaging material of the present invention is applied is not particularly limited, examples include lithium ion batteries, lithium ion polymer batteries, lead storage batteries, nickel-hydrogen storage batteries, nickel-cadmium storage batteries, nickel-iron storage batteries, nickel-zinc storage batteries, silver oxide-zinc storage batteries, metal-air batteries, polyvalent cation batteries, condensers, and capacitors. Among these secondary batteries, preferred secondary batteries to which the battery packaging material of the present invention is applied include lithium ion batteries and lithium ion polymer batteries.
In the battery packaging material according to the first embodiment of the present invention, crushing of the adhesive layer is effectively prevented when the heat-sealable resin layer is heat-sealed with itself, and a high sealing strength is achieved in a high-temperature environment. For this reason, the battery packaging material according to the first embodiment of the present invention can be suitably used particularly as a battery packaging material used in batteries for vehicles or batteries for mobile equipment, in which high hermeticity is required for the battery elements in a high-temperature environment.
In the battery packaging material according to the second embodiment of the present invention, a high sealing strength is achieved by means of heat sealing, even when an electrolytic solution is contacted with the heat-sealable resin layer in a high-temperature environment, and the heat-sealable resin layer is heat-sealed with itself, with the electrolytic solution being attached to the heat-sealable resin layer. For this reason, the battery packaging material according to the second embodiment of the present invention can be suitably used particularly as a battery packaging material used in batteries for vehicles or batteries for mobile equipment, which undergoes an aging step in a high-temperature environment.
In the battery packaging material according to the third embodiment of the present invention, contamination of the mold during molding is prevented, and a high sealing strength is achieved by means of heat sealing. For this reason, the battery packaging material according to the third embodiment of the present invention can be suitably used particularly as a battery packaging material used in large batteries such as batteries for vehicles or stationary batteries, in which contamination of the mold with a lubricant is likely to become a problem, and a high sealing strength is required.

Examples

The present invention will be hereinafter described in detail with reference to examples and comparative examples; however, the present invention is not limited to the examples.

<Production of Battery Packaging Material according to the First Embodiment>

Examples 1A-3A and Comparative Examples 1A-3A

As a base material layer, a polyethylene terephthalate (PET) film (thickness: 12 μm) and a stretched nylon (ONy) film (thickness: 15 μm) were prepared, and then a two-liquid urethane adhesive (a polyol compound and an aromatic isocyanate-based compound) was applied (3 μm) to the PET film, and bonded to the ONy film. As a barrier layer, an aluminum alloy foil (JIS H4160: 1994 A8021H-O (thickness: 40 μm)) was prepared. Subsequently, a two-liquid urethane adhesive (a polyol compound and an aromatic isocyanate-based compound) was applied to one surface of the aluminum alloy foil to form an adhesive agent layer (thickness: 3 μm) on the barrier layer. Subsequently, the adhesive agent layer on the barrier layer and the base material layer (ONy film-side) were laminated together using a dry lamination method, and then subjected to an aging treatment to prepare a laminate having the base material layer/the adhesive agent layer/the barrier layer. Both surfaces of the aluminum alloy foil had been subjected to a chemical conversion treatment. The chemical conversion treatment of the aluminum alloy foil was performed by applying a treatment solution containing a phenol resin, a chromium fluoride compound, and phosphoric acid to both surfaces of the aluminum alloy foil, using a roll coating method, such that the amount of chromium applied became 10 mg/$m^2$ (dry mass), followed by baking.

Subsequently, a maleic anhydride-modified polypropylene as an adhesive layer (thickness: 40 μm) and random polypropylene as a heat-sealable resin layer (thickness: 40 μm) were co-extruded onto the barrier layer of each laminate obtained above, so that the adhesive layer/the heat-sealable resin layer were laminated on the barrier layer. As a result, a battery packaging material was obtained in which the base material layer/the adhesive agent layer/the barrier layer/the adhesive layer/the heat-sealable resin layer were laminated in this order. The maleic anhydride-modified polypropylenes used as the adhesive layers in Examples 1A to 3A and Comparative Examples 1A to 3A were different from each other, and had logarithmic decrements ΔE at 120°C as shown in Table 1A (values measured with a rigid-body pendulum-type physical property tester).

<Measurement of Logarithmic Decrement ΔE of Adhesive Layer>

Each of the battery packaging materials obtained above was cut into a rectangle having a size of 15 mm in width (TD: Transverse Direction) × 150 mm in length (MD: Machine Direction) to prepare a test sample (battery packaging material 10). MD of the battery packaging material corresponds to the rolling direction (RD) of the aluminum alloy foil, and TD of the battery packaging material corresponds to TD of the aluminum alloy foil. The rolling direction (RD) of the aluminum alloy foil can be identified by rolling marks. When MD of the battery packaging material cannot be identified by the rolling marks of the aluminum alloy foil, it can be identified using the following method: In a method for identifying MD of the battery packaging material, cross sections of the heat-sealable resin layer of the battery packaging material are observed with an electron microscope to identify a sea-island structure, and MD is determined as the direction parallel to a cross section having the maximum average of the diameters of island shapes in the direction perpendicular to the thickness direction of the heat-sealable resin layer. Specifically, the angle of the cross section of the heat-sealable resin layer in the longitudinal direction is varied by 10 degrees from the direction parallel to the cross section in the longitudinal direction, and cross sections (a total of 10 cross sections) until the direction perpendicular to the cross section in the longitudinal direction is reached are observed in electron microscope photographs to identify a sea-island structure. Subsequently, for each cross section, the shapes of individual islands are observed. In the shape of each individual island, the linear distance connecting the leftmost end in the direction perpendicular to the thickness direction of the heat-sealable resin layer and the rightmost end in the perpendicular direction is defined as the diameter y. For each cross section, the average of the diameters y of top 20 island shapes in decreasing order of the diameter y of the island shape is calculated. MD is determined as the direction parallel to a cross section having the maximum average of the diameters y of the island shape. Fig. 7 shows a schematic diagram for explaining the method for measuring the logarithmic decrement ΔE by rigid-body pendulum measurement. A rigid-body pendulum-type physical property tester (model: RPT-3000W from A&D Company, Limited) was used: FRB-100 was used as the frame of a pendulum 30, RBP-060 was used as a cylindrical edge 30a of the edge portion, and CHB-100 was used as a cooling/heating block 31; additionally, a vibration displacement detector 32 and a weight 33 were used; and the initial amplitude was set to 0.3 degree. The test sample was placed on the cooling/heating block 31, with the measurement surface (adhesive layer) facing upward, and the cylindrical edge 30a equipped with the pendulum 30 was mounted on the measurement surface such that the axial direction became orthogonal to the MD direction of the test sample. Moreover, to prevent floating or warping of the test sample during measurement, tape was applied to regions of the test sample that do not affect the measurement results, and fixed on the cooling/heating block 31. The cylindrical edge was contacted with the surface of the adhesive layer. Subsequently, using the cooling/heating block 31, measurement of the logarithmic decrement ΔE of the adhesive layer was performed in the range of temperatures of 30 to 200°C at a heating rate of 3°C/minute. The

logarithmic decrement ΔE in the state where the surface temperature of the adhesive layer of the test sample (battery packaging material 10) had reached 120°C was adopted. (After measured once, the test sample was not used again, and a new test sample prepared by cutting was used; the average value of three measurements (N=3) was used.) As for the adhesive layer, each of the battery packaging materials obtained above was immersed in 15% hydrochloric acid to dissolve the base material layer and the aluminum foil, and the test sample having the adhesive layer and the heat-sealable resin layer only was sufficiently dried, and then subjected to measurement of the logarithmic decrement ΔE. Table 1A shows the logarithmic decrement ΔE at 120°C of each adhesive layer. (The logarithmic decrement ΔE is calculated based on the following equation:

$$\Delta E = [\ln(A1/A2) + \ln(A2/A3) + ... + \ln(An/An + 1)] /n$$

A: amplitude
n: frequency)

<Measurement of Thickness Remaining Ratio of Adhesive Layer>

Each of the battery packaging materials obtained above was cut into a size of 150 mm in length × 60 mm in width to prepare a test sample (battery packaging material 10). Subsequently, the heat-sealable resin layer of a test sample having the same size as above, prepared from the same battery packaging material, was opposed to itself. Subsequently, in this state, using metal plates having a width of 7 mm, the heat-sealable resin layer was heated and pressed in a laminated direction from both sides of the test sample, at a temperature of 190°C and each of the surface pressures (MPa) shown in Table 1A, for a time of 3 seconds, so that the heat-sealable resin layer was heat-sealed with itself. Subsequently, the heat-sealed portion of the test sample was cut in the laminated direction using a microtome, and the thickness of the adhesive layer was measured for the exposed cross section. Similarly, the test sample before heat sealing was cut in the laminated direction using a microtome, and the thickness of the adhesive layer was measured for the exposed cross section. For each battery packaging material, the ratio of the thickness of the adhesive layer after heat sealing, relative to the thickness of the adhesive layer before heat sealing, was calculated to measure the thickness remaining ratio (%) of the adhesive layer. The results are shown in Table 1A.

<Measurement of Sealing Strength in 25°C Environment or 140°C Environment>

Each of the battery packaging materials obtained above was cut into a rectangle having a size of 60 mm in width × 150 mm in length to prepare a test sample (battery packaging material 10). Subsequently, as shown in Fig. 4, the test sample was folded over at the center P in the longitudinal direction, so that the heat-sealable resin layer was opposed to itself. Subsequently, using metal plates 20 having a width of 7 mm, at a surface pressure of 1.0 MPa and a temperature of 190°C for a time of 1 second, the heat-sealable resin layer was heat-sealed with itself over 7 mm (width of the metal plates) in the longitudinal direction of the test sample, across the entire width (i.e., 60 mm). Subsequently, as shown in Fig. 5, the test sample was cut into a width of 15 mm, using a two-edged sample cutter. In Fig. 5, the heat-sealed region is indicated by S. Subsequently, as shown in Fig. 6, in the form of T-peel, using a tensile testing machine, the tensile strength was measured by peeling the heat-sealed interface at a tensile rate of 300 mm/minute, a peel angle of 180°, and a distance between chucks of 50 mm, in an environment at a temperature of 25°C or 140°C, and the maximum value of the peeling strength (N/15 mm) during a time of 1.5 seconds from the start of measuring the tensile strength was determined as the sealing strength in the 25°C environment or the sealing strength in the 140°C environment. The tensile test at each temperature was performed in a thermostat. In the thermostat adjusted to a predetermined temperature, the test sample was mounted on the chucks and held for 2 minutes, and then the measurement was started. Each of the sealing strengths was determined as the average value (n=3) of measurements of three test samples similarly prepared. The results are shown in Table 1A.

[Table 1A]

| | Logarithmic Decrement ΔE at 120°C of Adhesive Layer | Thickness Remaining Ratio (%) of Adhesive Layer | | | | Sealing Strength (N/15mm) | |
|---|---|---|---|---|---|---|---|
| | | Surface Pressure 0.5MPa | Surface Pressure 1.0MPa | Surface Pressure 1.5MPa | Surface Pressure 2.0MPa | 25°C Environment | 140°C Environment |
| Example1A | 1.51 | 82 | 63 | 50 | 42 | 125 | 4.2 |

(continued)

| | Logarithmic Decrement Δ E at 120°C of Adhesive Layer | Thickness Remaining Ratio (%) of Adhesive Layer | | | | Sealing Strength (N/15mm) | |
|---|---|---|---|---|---|---|---|
| | | Surface Pressure 0.5MPa | Surface Pressure 1.0MPa | Surface Pressure 1.5MPa | Surface Pressure 2.0MPa | 25°C Environment | 140°C Environment |
| Example2A | 1.48 | 83 | 64 | 51 | 44 | 130 | 4.4 |
| Example3A | 1.49 | 84 | 65 | 50 | 45 | 140 | 4.7 |
| Comparative Example1A | 2.60 | 73 | 50 | 38 | 33 | 130 | 3.2 |
| Comparative Example2A | 2.23 | 69 | 45 | 32 | 27 | 125 | 3.0 |
| Comparative Example3A | 2.13 | 72 | 49 | 36 | 31 | 125 | 3.4 |

The results shown in Table 1A show that in each of the battery packaging materials of Examples 1A to 3A, the adhesive layer positioned between the barrier layer and the heat-sealable resin layer has a logarithmic decrement ΔE of 2.0 or less at 120°C according to the rigid-body pendulum measurement, and therefore, crushing of the adhesive layer is effectively prevented when the heat-sealable resin layer is heat-sealed with itself, and a high sealing strength is achieved in a high-temperature environment.

<Production of Battery Packaging Material according to the Second Embodiment>

Example 1B and Comparative Example 1B

As a base material layer, a polyethylene terephthalate (PET) film (thickness: 12 μm) and a stretched nylon (ONy) film (thickness: 15 μm) were prepared, and then a two-liquid urethane adhesive (a polyol compound and an aromatic isocyanate-based compound) was applied (3 μm) to the PET film, and bonded to the ONy film. Moreover, as a barrier layer, an aluminum foil (JIS H4160: 1994 A8021H-O (thickness: 40 μm)) was prepared. Subsequently, a two-liquid urethane adhesive (a polyol compound and an aromatic isocyanate-based compound) was applied to one surface of the aluminum foil to form an adhesive agent layer (thickness: 3 μm) on the barrier layer. Subsequently, the adhesive agent layer on the barrier layer and the base material layer (ONy film-side) were laminated together using a dry lamination method, and then subjected to an aging treatment to prepare a laminate having the base material layer/the adhesive agent layer/the barrier layer. Both surfaces of the aluminum foil had been subjected to a chemical conversion treatment. The chemical conversion treatment of the aluminum foil was performed by applying a treatment solution containing a phenol resin, a chromium fluoride compound, and phosphoric acid to both surfaces of the aluminum foil, using a roll coating method, such that the amount of chromium applied became 10 mg/$m^2$ (dry mass), followed by baking.

Subsequently, an acid-modified polypropylene as an adhesive layer (thickness: 40 μm) and a polypropylene as a heat-sealable resin layer (thickness: 40 μm) were co-extruded onto the barrier layer of each laminate obtained above, so that the adhesive layer and the heat-sealable resin layer were laminated on the barrier layer. As a result, a battery packaging material was obtained in which the base material layer/the adhesive agent layer/the barrier layer/the adhesive layer/the heat-sealable resin layer were laminated in this order. In the heat-sealable resin layer, the amount of the low-molecular-weight component in the polypropylene was adjusted to adjust the value ($T_2/T_1$) obtained by dividing, by the temperature difference $T_1$, the temperature difference $T_2$ between the onset point (extrapolated melting onset temperature) and the end point (extrapolated melting end temperature) of the melting peak temperature of the heat-sealable resin layer, measured using the methods described below.

<Measurement of Extrapolated Melting Onset Temperature and Extrapolated Melting End Temperature of Melting Peak Temperature>

For the polypropylene used as the heat-sealable resin layer of each of the above-described battery packaging materials, using the methods described below, the extrapolated melting onset temperature and the extrapolated melting end temperature of the melting peak temperature were measured, and then the temperature differences $T_1$ and $T_2$ between the extrapolated melting onset temperature and the extrapolated melting end temperature were measured.

Then, based on the obtained temperature differences $T_1$ and $T_2$, the ratio between these values ($T_2/T_1$) and the absolute value of the difference between these values $|T_2 - T_1|$ were calculated. The results are shown in Table 1B.

(Measurement of Temperature Difference $T_1$)

In accordance with JIS K 7121: 2012, using differential scanning calorimetry (DSC), a DSC curve was obtained for the polypropylene used as the heat-sealable resin layer of each of the battery packaging materials described above. Based on the obtained DSC curve, the temperature difference $T_1$ between the extrapolated melting onset temperature and the extrapolated melting end temperature of the melting peak temperature of the heat-sealable resin layer was measured.

(Measurement of Temperature Difference $T_2$)

In an environment at a temperature of 85°C, the polypropylene used as the heat-sealable resin layer was allowed to stand for 72 hours in an electrolytic solution, which is a solution having a lithium hexafluorophosphate concentration of 1 mol/l, and a volume ratio of ethylene carbonate, diethyl carbonate, and dimethyl carbonate of 1:1:1, and then sufficiently dried. Subsequently, in accordance with JIS K 7121: 2012, using differential scanning calorimetry (DSC), a DSC curve was obtained for the polypropylene after drying. Subsequently, based on the obtained DSC curve, the temperature difference $T_2$ between the extrapolated melting onset temperature and the extrapolated melting end temperature of the melting peak temperature of the heat-sealable resin layer after drying was measured.

In the measurement of the extrapolated melting onset temperature and the extrapolated melting end temperature of the melting peak temperature, Q200 from TA Instruments Inc. was used as a differential scanning calorimeter. As for the DSC curve, the test sample was held at -50°C for 10 minutes, and then heated to 200°C at a heating rate of 10°C/minute (first time) and held at 200°C for 10 minutes, and then cooled to -50°C at a cooling rate of -10°C/minute and held at -50°C for 10 minutes, and then heated to 200°C at a heating rate of 10°C/minute (second time) and held at 200°C for 10 minutes. As the DSC curve, a DSC curve obtained when the test sample was heated to 200°C for the second time was used. Moreover, for the measurement of the temperature difference $T_1$ and the temperature difference $T_2$, in the DSC curve for each, among melting peaks that appeared in the range of 120 to 160°C, the melting peak having the maximum difference in thermal energy input was analyzed. Even when two or more overlapping peaks were present, only the melting peak having the maximum difference in thermal energy input was analyzed.

The extrapolated melting onset temperature refers to the onset point of the melting peak temperature, and was defined as the temperature at the intersection point between the straight line formed by extending the lower temperature (65 to 75°C)-side baseline to the higher temperature side, and the tangent drawn at the point having the maximum gradient to the lower temperature-side curve of the melting peak having the maximum difference in thermal energy input. The extrapolated melting end temperature refers to the end point of the melting peak temperature, and was defined as the temperature at the intersection point between the straight line formed by extending the higher temperature (170°C)-side baseline to the lower temperature side, and the tangent drawn at the point having the maximum gradient to the higher temperature-side curve of the melting peak having the maximum difference in thermal energy input.

<Measurement of Sealing Strength before Contact with Electrolytic Solution>

The tensile strength (sealing strength) was measured in the same manner as in <Measurement of Sealing Strength after Contact with Electrolytic Solution> below, except that the electrolytic solution was not injected into the test sample. The maximum tensile strength until the heat-sealed portion was completely peeled was determined as the sealing strength before contact with the electrolytic solution. In Table 2B, the sealing strength before contact with the electrolytic solution is shown as the sealing strength at a contact time of 0 h with the electrolytic solution at 85°C.

<Measurement of Sealing Strength after Contact with Electrolytic Solution>

As shown in the schematic diagram of Fig. 9, each of the battery packaging materials obtained above was cut into a rectangle having a size of 100 mm in width (x direction) × 200 mm in length (z direction) to prepare a test sample (battery packaging material 10) (Fig. 9a). The test sample (battery packaging material 10) was folded over at the center in the z direction, so that the heat-sealable resin layer side was placed over itself (Fig. 9b). Subsequently, both ends of the folded test sample in the x direction were sealed by heat sealing (temperature: 190°C, surface pressure: 2.0 MPa, time: 3 seconds) to mold the test sample into a bag having one opening E (Fig. 9c). Subsequently, 6 g of an electrolytic solution (a solution having a lithium hexafluorophosphate concentration of 1 mol/l, and a volume ratio of ethylene carbonate, diethyl carbonate, and dimethyl carbonate of 1:1:1) was injected through the opening E in the test sample molded into the bag (Fig. 9d), and the end having the opening E was sealed by heat sealing (temperature: 190°C, surface

pressure: 2.0 MPa, time: 3 seconds) (Fig. 9e). Subsequently, with its folded portion facing down, the bag-shaped test sample was allowed to stand in an environment at a temperature of 85°C for a predetermined storage time (time for contact with the electrolytic solution, which is 72 or 120 hours, for example). Subsequently, the end of the test sample was cut (Fig. 9e) to discharge all of the electrolytic solution. Subsequently, with the electrolytic solution being attached to the surface of the heat-sealable resin layer, the upper and lower surfaces of the test sample were held between metal plates 20 (7 mm in width), and the heat-sealable resin layer was heat-sealed with itself at a temperature of 190°C and a surface pressure of 1.0 MPa for a time of 3 seconds (Fig. 9f). Subsequently, the test sample was cut into a width of 15 mm using a two-edged sample cutter so that the sealing strength at a width (x direction) of 15 mm could be measured (Figs. 9f and 9g). Subsequently, in the form of T-peel, using a tensile testing machine (AGS-xplus (trade name) from Shimadzu Corporation), the tensile strength (sealing strength) was measured by peeling the heat-sealed interface at a tensile rate of 300 mm/minute, a peel angle of 180°, and a distance between chucks of 50 mm, in an environment at a temperature of 25°C (Fig. 6). The maximum tensile strength until the heat-sealed portion was completely peeled (the distance to peel was 7 mm, i.e., the width of the metal plates) was determined as the sealing strength after contact with the electrolytic solution.

Table 2B shows the sealing-strength retention ratio (%) after contact with the electrolytic solution, calculated using, as the reference (100%), the sealing strength before contact with the electrolytic solution.

[Table 1B]

| | Contact with Electrolytic Solution at 85 °C | Melting Peak Temperature | | | T2/T1 Ratio | Absolute Value of Difference \|T2 - T1\| |
|---|---|---|---|---|---|---|
| | | Onset Point (°C) | End Point (°C) | Temperature Difference (°C) between Onset Point and End Point | | |
| Example1B | before | 126.3 | 161.0 | $T_1$=34.7 | 0.79 | 7.2 |
| | after | 128.1 | 155.6 | $T_2$=27.5 | | |
| Comparative ExampleIB | before | 126.9 | 157.5 | $T_1$=30.6 | 0.59 | 12.6 |
| | after | 131.4 | 149.4 | $T_2$=18.0 | | |

[Table 2B]

| | | Contact Time with Electrolytic Solution at 85°C | | | |
|---|---|---|---|---|---|
| | | 0 h | 24 h | 72 h | 120 h |
| Example18 | Sealing Strength (N/15mm) | 140 | 140 | 140 | 130 |
| | Retention Ratio(%) | 100 | 100 | 100 | 93 |
| Comparative Example1B | Sealing Strength (N/15mm) | 132 | 107 | 82 | 61 |
| | Retention Ratio(%) | 100 | 81 | 62 | 46 |

The results shown in Table 1B show that in the battery packaging material of Example 1B, the value obtained by dividing the temperature difference $T_2$ by the temperature difference $T_1$ is 0.60 or more, so that a high sealing strength is achieved by means of heat sealing, even when the electrolytic solution is contacted with the heat-sealable resin layer in a high-temperature environment, and the heat-sealable resin layer is heat-sealed with itself, with the electrolytic solution being attached to the heat-sealable resin layer.

<Production of Battery Packaging Material according to the Third Embodiment>

Examples 1C-3C and Comparative Examples 1C-2C

As a base material layer, a polyethylene terephthalate (PET) film (thickness: 12 μm) and a stretched nylon (ONy) film (thickness: 15 μm) were prepared, and then a two-liquid urethane adhesive (a polyol compound and an aromatic isocyanate-based compound) was applied (3 μm) to the PET film, and bonded to the ONy film. As a barrier layer, an aluminum alloy foil (JIS H4160: 1994 A8021H-O (thickness: 40 μm)) was prepared. Subsequently, a two-liquid urethane adhesive (a polyol compound and an aromatic isocyanate-based compound) was applied to one surface of

the aluminum alloy foil to form an adhesive agent layer (thickness: 3 μm) on the barrier layer. Subsequently, the adhesive agent layer on the barrier layer and the base material layer (ONy film-side) were laminated together using a dry lamination method, and then subjected to an aging treatment to prepare a laminate having the base material layer/the adhesive agent layer/the barrier layer. Both surfaces of the aluminum alloy foil had been subjected to a chemical conversion treatment. The chemical conversion treatment of the aluminum alloy foil was performed by applying a treatment solution containing a phenol resin, a chromium fluoride compound, and phosphoric acid to both surfaces of the aluminum foil, using a roll coating method, such that the amount of chromium applied became 10 mg/$m^2$ (dry mass), followed by baking.

Subsequently, an acid-modified polyolefin as an adhesive layer (thickness: 40 μm) and a polypropylene as a heat-sealable resin layer (thickness: 40 μm) were co-extruded onto the barrier layer of each laminate obtained above, so that the adhesive layer and the heat-sealable resin layer were laminated on the barrier layer. As a result, a battery packaging material was obtained in which the base material layer/the adhesive agent layer/the barrier layer/the adhesive layer/the heat-sealable resin layer were laminated in this order. The tensile elastic modulus of the heat-sealable resin layer, measured using the method described below, was adjusted by adjusting the molecular weight, the melt mass-flow rate (MFR), and the like of the resin constituting the heat-sealable resin layer.

A predetermined amount (700 ppm) of erucamide was blended as a lubricant into the base material layer and the heat-sealable resin layer. Specifically, erucamide was blended into the resin constituting each of the base material layer and the heat-sealable resin layer, and then bled out to the surface of each of the base material layer and the heat-sealable resin layer.

<Measurement of Tensile Elastic Modulus>

The tensile elastic modulus of the heat-sealable resin layer of each of the battery packaging materials obtained above was measured in accordance with JIS K 7161: 2014. The results are shown in Table 1C.

<Measurement of Dynamic Friction Coefficient>

The dynamic friction coefficient between the heat-sealable resin layer of each of the battery packaging materials obtained above and a stainless steel plate was measured in accordance with JIS K7125: 1999. Initially, a test sample (battery packaging material 10) having a size of 80 mm (TD: Transverse Direction) × 200 mm (MD: Machine Direction) was prepared by cutting each of the battery packaging materials obtained above. Subsequently, as shown in Fig. 12, the test sample was allowed to stand, with the heat-sealable resin layer 4 side facing downward, on the surface of a metal plate 11 having a rectangular shape in a plan view, which was allowed to stand on a horizontal surface 21. Subsequently, a 200-g weight 12 was placed on the surface of the base material layer side of the test sample. Subsequently, the test sample was pulled 25 mm in a horizontal direction at a tensile rate of 100 mm/min, and a dynamic friction coefficient (N) at this time was measured. As the metal plate 11, a metal plate was used made of stainless steel having a surface Rz (maximum height of roughness profile) of 0.8 μm, as specified in Table 2 of JIS B 0659-1: 2002 Appendix 1 (Referential) Surface Roughness Standard Specimens for Comparison. The area of contact between the surface of the metal plate 11 and the heat-sealable resin layer 4 of the test sample was 160 $cm^2$ (the surface of contact was square). The area of contact between the weight 12 and the surface of the base material layer side of the test sample was 40 $cm^2$ (the surface of contact was square). The dynamic friction coefficient was calculated by dividing the obtained dynamic friction force (N) by the normal force (1.96 N) of the weight. The results are shown in Table 1C.

<Measurement of Sealing Strength>

Each of the battery packaging materials obtained above was cut into a rectangle having a size of 60 mm in width × 150 mm in length to prepare a test sample (battery packaging material 10). As shown in Fig. 6, the test sample was folded over at the center P in the longitudinal direction, so that the heat-sealable resin layer was opposed to itself. Subsequently, using metal plates 20 having a width of 7 mm, at a temperature of 190°C and a surface pressure of 1.0 MPa for a time of 1 second, the heat-sealable resin layer was heat-sealed with itself over 7 mm (width of the metal plates) in the longitudinal direction of the test sample, across the entire width (i.e., 60 mm). Subsequently, as shown in Fig. 5, the test sample was cut into a width of 15 mm. In Figs. 5 and 6, the heat-sealed region is indicated by S. Subsequently, as shown in Fig. 6, in the form of T-peel, using a tensile testing machine (AGS-xplus (trade name) from Shimadzu Corporation), the tensile strength (sealing strength (N/15 mm)) was measured by peeling the heat-sealed interface at a tensile rate of 300 mm/minute, a peel angle of 180°, and a distance between chucks of 50 mm, in an environment at a temperature of 25°C and a relative humidity of 50%. Table 1C shows the sealing strength (N/15 mm) at 1 second after the start of the measurement, the sealing strength (N/15 mm) at 2.5 seconds after the start of the measurement, and the sealing strength (N/15 mm) at 10 seconds after the start of the measurement. The value of each sealing strength is the average value of measurements conducted on three test samples.

<Evaluation of Effect of Preventing Contamination of Mold>

Each of the battery packaging materials obtained above was cut into a rectangle having a size of 170 mm in length (z direction) × 170 mm in width (x direction) to prepare a test sample (battery packaging material 10). Using a rectangular molding die having a diameter of 100 mm (x direction) × 110 mm (z direction) (die; made of stainless steel having a surface with an Rz (maximum height of roughness profile) of 0.8 μm, as specified in Table 2 of JIS B 0659-1: 2002 Appendix 1 (Referential) Surface Roughness Standard Specimens for Comparison; corner R: 3.5) and a corresponding molding die (punch; made of stainless steel having a surface with an Rz (maximum height of roughness profile) of 0.8 μm, as specified in Table 2 of JIS B 0659-1: 2002 Appendix 1 (Referential) Surface Roughness Standard Specimens for Comparison; corner R: 3.0), the above-described sample was cold-formed (draw-in one-step molding) 500 consecutive times at a pressing force (surface pressure) of 0.2 MPa and a molding depth of 5.0 mm. Molding was performed with the punch being disposed on the heat-sealable resin layer side of the test sample. The clearance between the punch and the die was 0.5 mm. The molding die and its surroundings were visually observed for the presence of adhesion of the lubricant due to rubbing against the test sample. The criteria for evaluating the effect of preventing contamination of the mold are as follows:

A: No adhesion of the lubricant to the molding die and its surroundings was observed.

C: Adhesion of the lubricant to the molding die and its surroundings was observed.

[Table 1C]

| | Tenses Elastic Modulus (MPa) of Heat-Sealable Resin Layer | Sealing Strength(N/15m m) | | | Dynamic Friction Coefficient | Effect of Preventing Contamination of Mold |
|---|---|---|---|---|---|---|
| | | 1 Second after Start of Measurement | 2.5 Seconds after Start of Measurement | 10 Seconds after Start of Measurement | | |
| Comparative Example1C | 420 | 140 | 140 | 140 | 0.28 | C |
| ExamplelC | 510 | 140 | 140 | 140 | 0.17 | A |
| Example2C | 650 | 140 | 140 | 140 | 0.14 | A |
| Example3C | 700 | 140 | 140 | 140 | 0.13 | A |
| Comparative Example2C | 1100 | 130 | 80 | 50 | 0.13 | A |

As is clear from the results shown in Table 1C, in the battery packaging materials of Examples 1C to 3C in which the tensile elastic modulus of the heat-sealable resin layer was in the range of 500 to 1000 MPa, as measured in accordance with JIS K 7161: 2014, sealing strengths of 100 N/15 mm or more were retained at 1 to 2.5 seconds after the start of the measurement, and even at 10 seconds after the start of the measurement, and excellent sealing strengths were achieved. Moreover, in the battery packaging materials of Examples 1C to 3C, contamination of the mold was also prevented, and both high sealing strengths and prevention of mold contamination were achieved.

Reference Signs List

1: base material layer
2: adhesive agent layer
3: barrier layer
4: heat-sealable resin layer
5: adhesive layer
6: surface coating layer

10: battery packaging material
30: pendulum
30a: cylindrical edge
31: cooling/heating block
32: vibration displacement detector
33: weight
A: housing space

## Claims

**1.** A battery packaging material comprising:

a laminate comprising at least a base material layer, a barrier layer, an adhesive layer, and a heat-sealable resin layer in this order, wherein
the adhesive layer has a logarithmic decrement ΔE of 2.0 or less at 120°C according to rigid-body pendulum measurement.

**2.** The battery packaging material according to claim 1, wherein the adhesive layer has a thickness remaining ratio of 40% or more, after the heat-sealable resin layer of the laminate is opposed to itself, and heated and pressed in a laminated direction at a temperature of 190°C and a surface pressure of 2.0 MPa for a time of 3 seconds.

**3.** The battery packaging material according to claim 1 or 2, wherein a resin constituting the adhesive layer includes an acid-modified polyolefin.

**4.** The battery packaging material according to any one of claims 1 to 3, wherein the adhesive layer has a thickness of 50 μm or less.

**5.** The battery packaging material according to any one of claims 1 to 4, wherein the thickness of the base material layer is 10 μm or more and 35 μm or less, or more than 35 μm and 50 μm or less.

**6.** The battery packaging material according to any one of claims 1 to 5, wherein the thickness of the barrier layer is 20 μm or more and 50 μm or less, or more than 50 μm and 100 μm or less.

**7.** The battery packaging material according to any one of claims 1 to 6, wherein the heat-sealable resin layer is formed of two or more layers composed of the same resin component or different resin components.

**8.** The battery packaging material according to any one of claims 1 to 7, wherein the thickness of the heat-sealable resin layer is 15 μm or more and 45 μm or less, or more than 45 μm and 60 μm or less.

**9.** The battery packaging material according to any one of claims 1 to 8, wherein the battery packaging material includes a surface coating layer on the base material layer, and
the surface coating layer comprises an additive, wherein the additive is titanium oxide, silica or kaolin.

**10.** The battery packaging material according to any one of claims 1 to 8, wherein the battery packaging material includes a surface coating layer on the base material layer, and
the surface coating layer comprises an additive, wherein the additive is at least two selected from the group consisting of talc, silica, graphite, kaolin, montmorilloide, montmorillonite, synthetic mica, hydrotalcite, silica gel, zeolite, aluminum hydroxide, magnesium hydroxide, zinc oxide, magnesium oxide, aluminum oxide, neodymium oxide, antimony oxide, titanium oxide, cerium oxide, calcium sulfate, barium sulfate, calcium carbonate, calcium silicate, lithium carbonate, calcium benzoate, calcium oxalate, magnesium stearate, alumina, carbon black, carbon nanotubes, high-melting-point nylons, crosslinked acrylics, crosslinked styrene, crosslinked polyethylene, benzoguanamine, gold, aluminum, copper, and nickel.

**11.** The battery packaging material according to any one of claims 1 to 10, wherein the base material layer contains at least one of a polyester resin and a polyamide resin.

**12.** The battery packaging material according to any one of claims 1 to 11, wherein a resin constituting the heat-sealable

resin layer includes a polyolefin.

**13.** The battery packaging material according to any one of claims 1 to 12, wherein the barrier layer is composed of an aluminum alloy foil or a stainless steel foil.

**14.** A method for producing a battery packaging material comprising the step of:

obtaining a laminate by laminating at least a base material layer, a barrier layer, an adhesive layer, and a heat-sealable resin layer in this order, wherein
the adhesive layer has a logarithmic decrement ΔE of 2.0 or less at 120°C according to rigid-body pendulum measurement.

**15.** A battery comprising a battery element comprising at least a positive electrode, a negative electrode, and an electrolyte, the battery element being housed in a package formed of the battery packaging material according to any one of claims 1 to 13.

Fig. 1

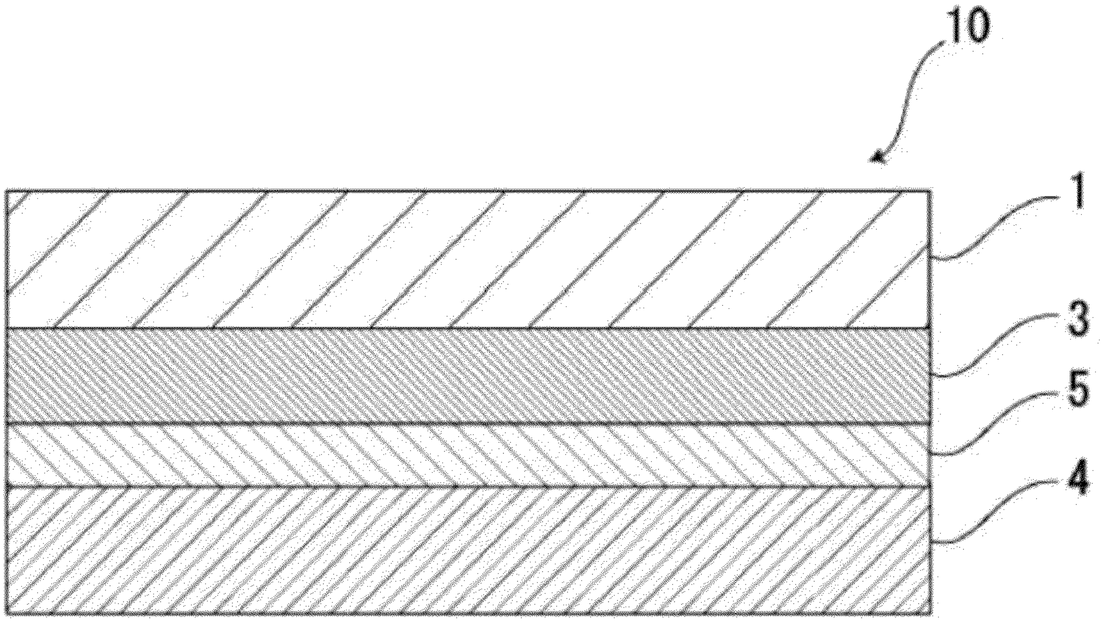


Fig. 2

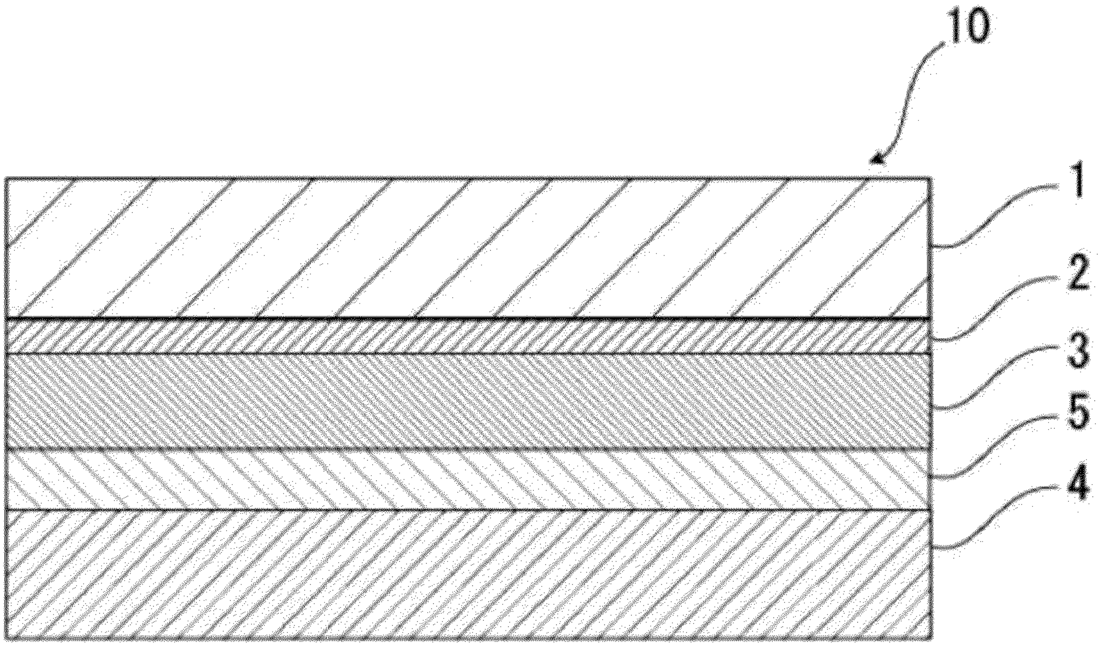

Fig. 3

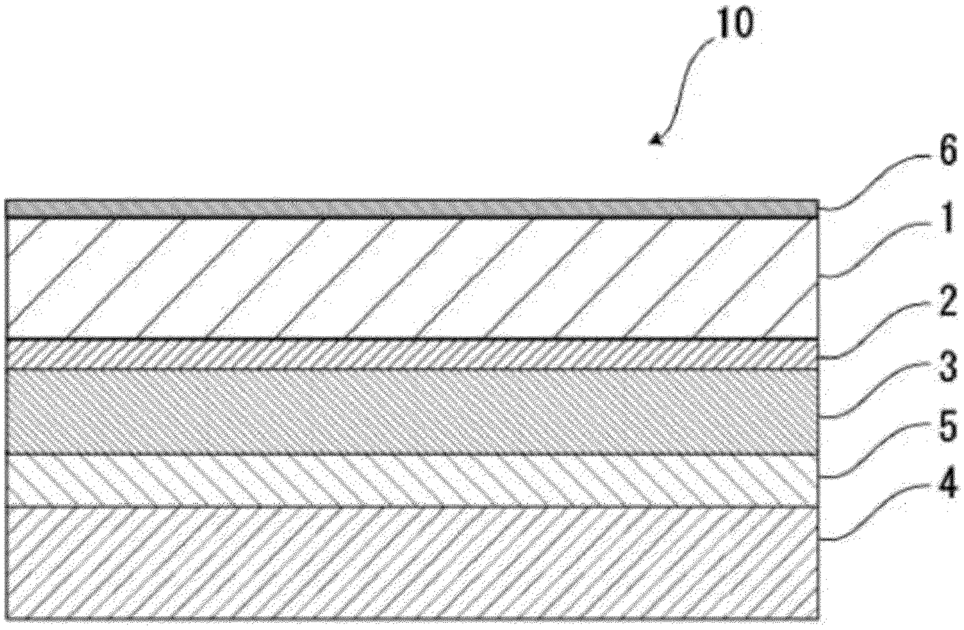


Fig. 4

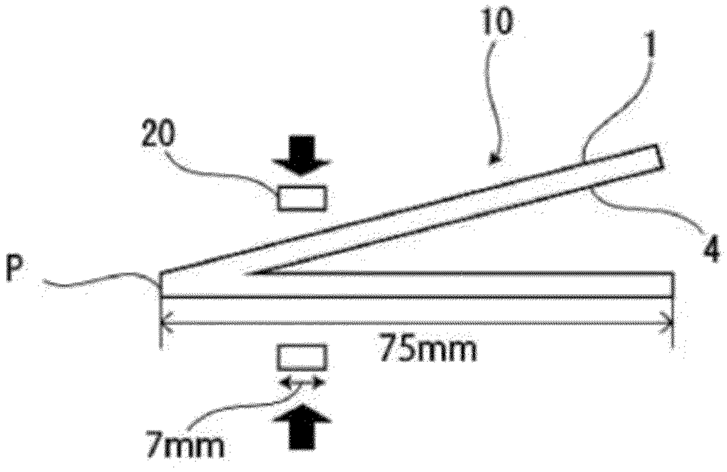


Fig. 5

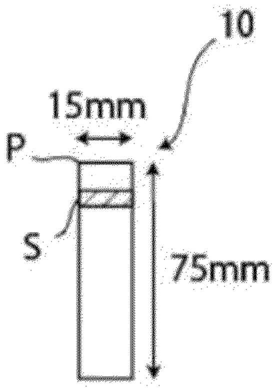

Fig. 6

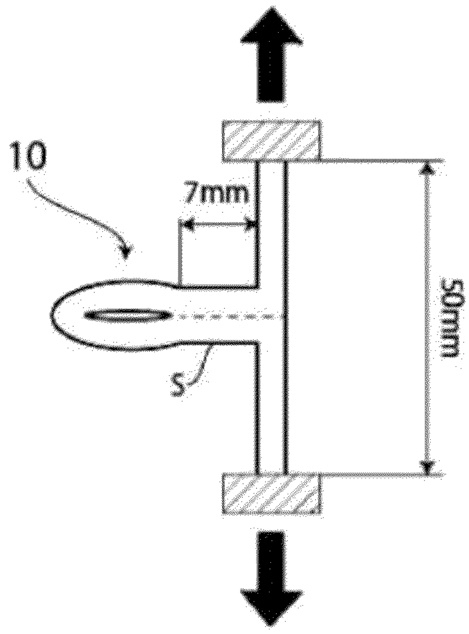


Fig. 7

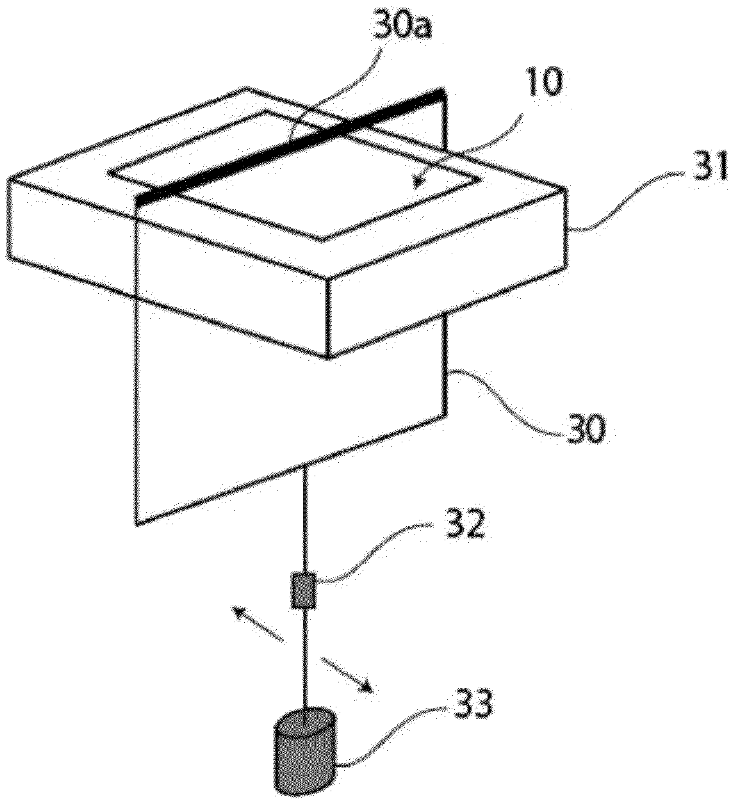

Fig. 8

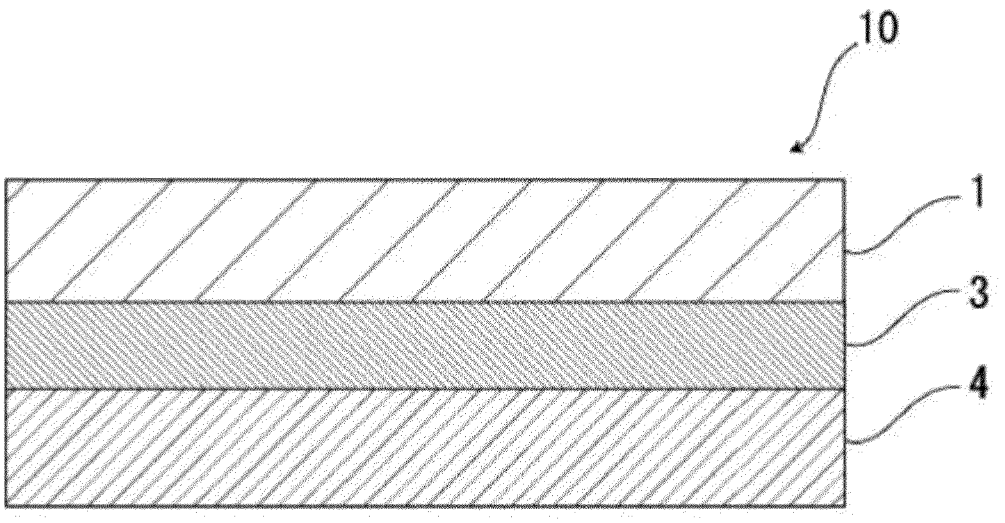


Fig. 9

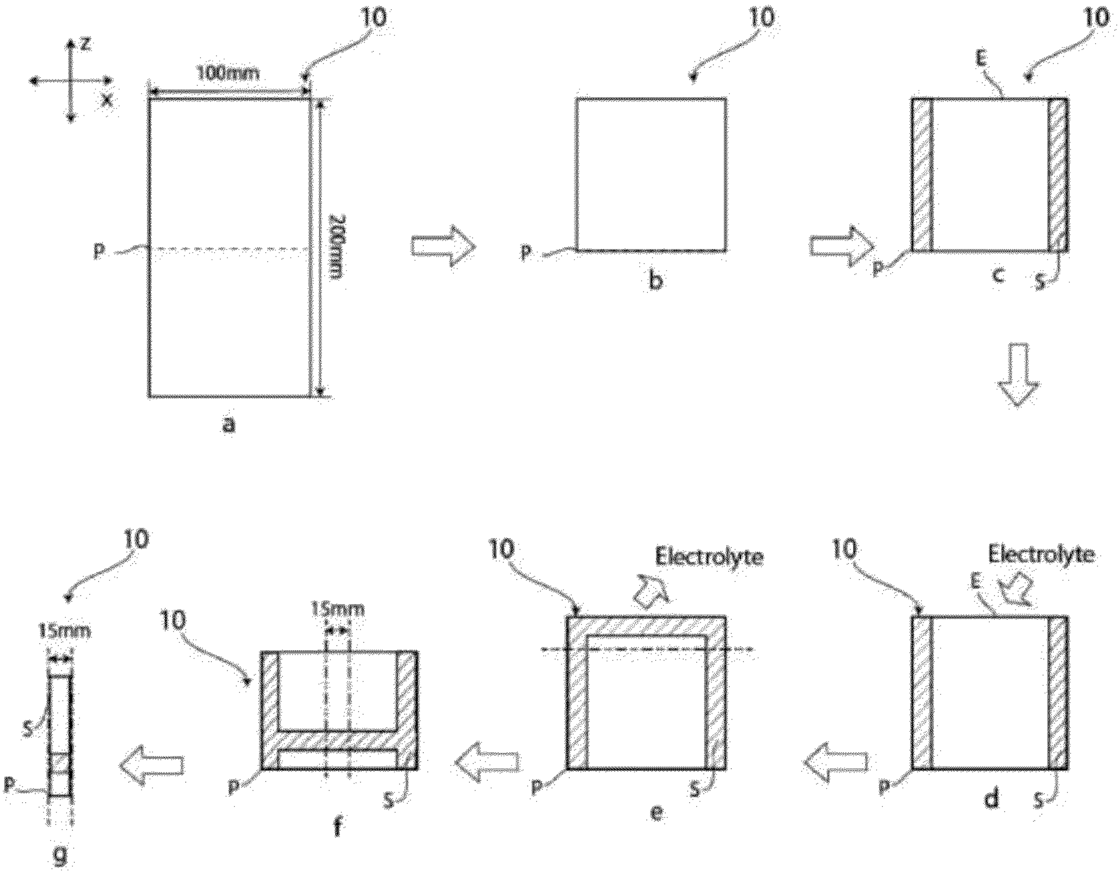

Fig. 10

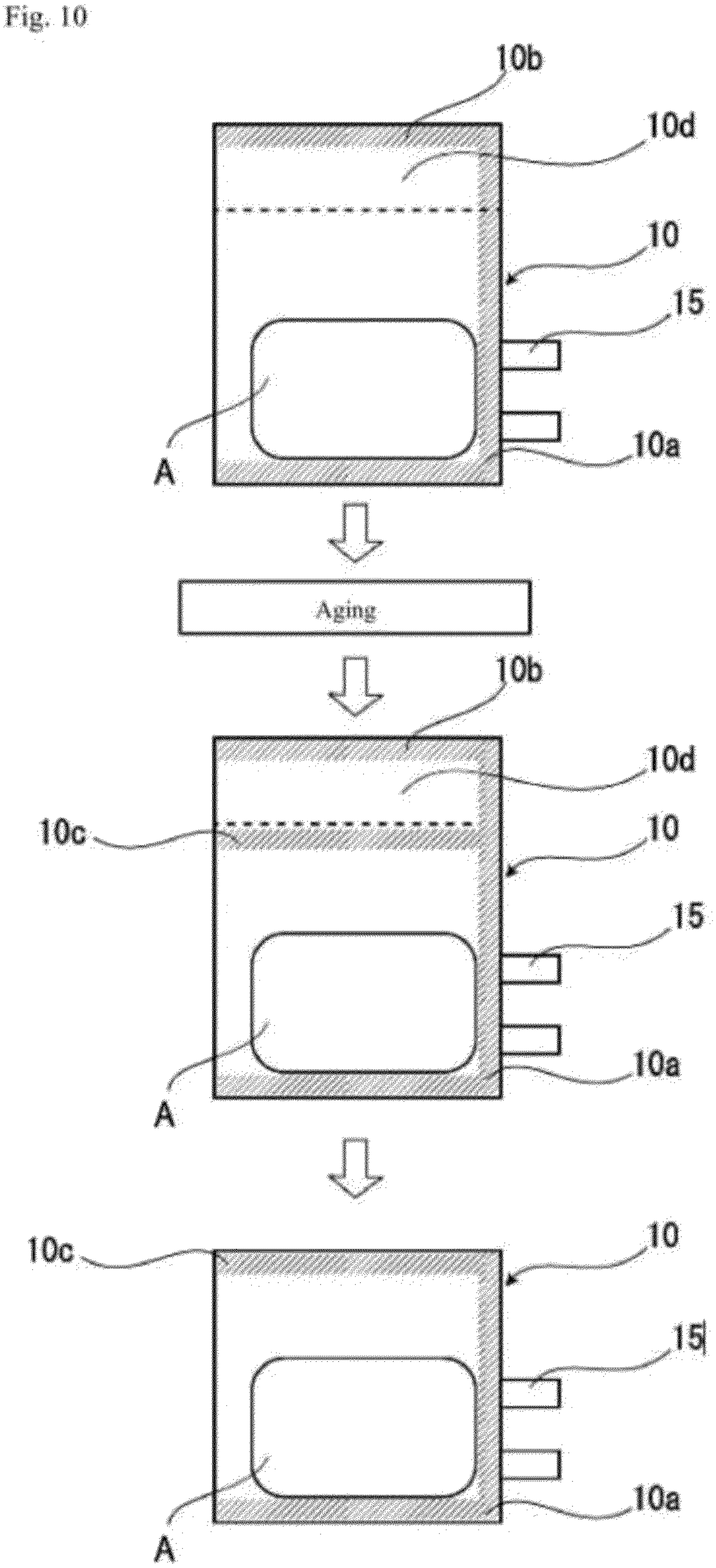

Fig. 11

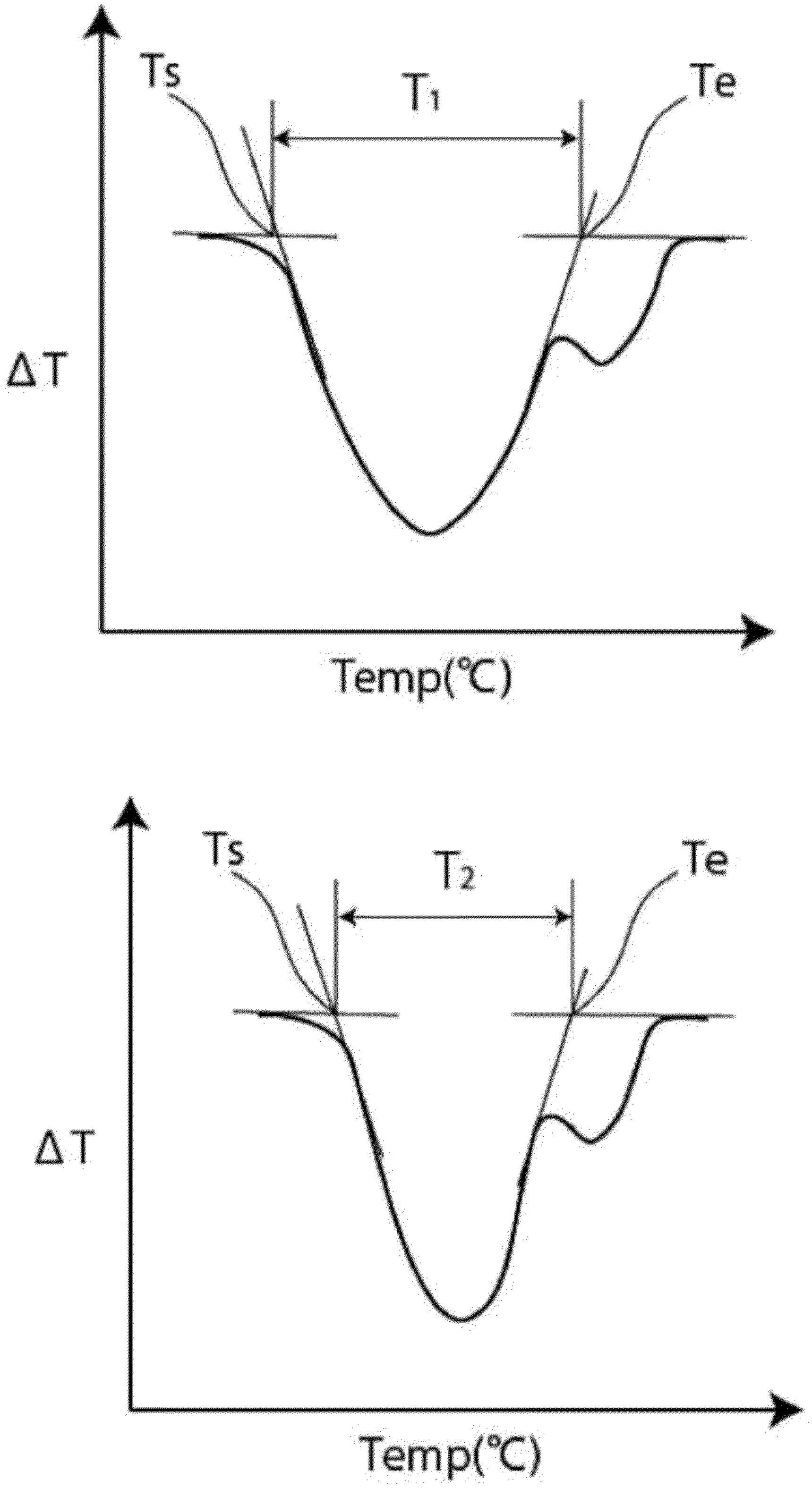

Fig. 12

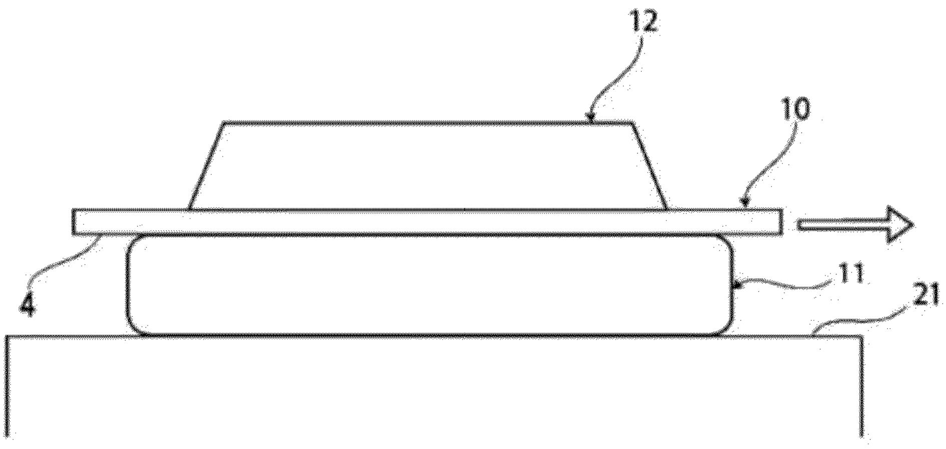
12
10
11
4
21

Fig. 13

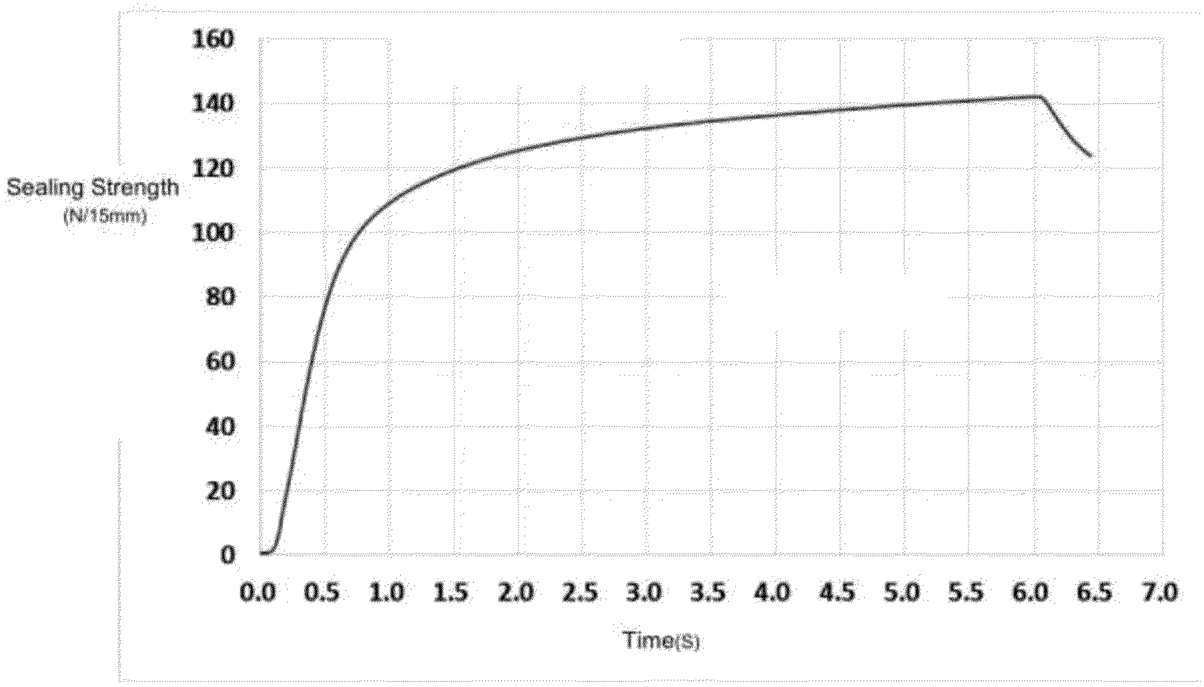
Sealing Strength
(N/15mm)
160
140
120
100
80
60
40
20
0
0.0 0.5 1.0 1.5 2.0 2.5 3.0 3.5 4.0 4.5 5.0 5.5 6.0 6.5 7.0
Time(S)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008287971 A